# EUROPÄISCHE PATENTSCHRIFT

(11) **EP 2 553 008 B1**
(45) Veröffentlichungstag und Bekanntmachung des Hinweises auf die Patenterteilung: **24.08.2016**
(21) Anmeldenummer: 11712233.3
(22) Anmeldetag: 30.03.2011
(51) Int. Cl.: C08K 5/00, C08K 5/36, C08K 5/49

(54) **FLAMMSCHUTZMITTEL**
FLAME RETARDANT AGENTS
AGENTS IGNIFUGES

(30) Priorität: 01.04.2010 EP 10158989
(43) Veröffentlichungstag der Anmeldung: 06.02.2013
(73) Patentinhaber: BASF SE, 67056 Ludwigshafen am Rhein (DE)
(72) Erfinder: HAHN, Klaus, 67281 Kirchheim (DE); FUCHS, Sabine, 68167 Mannheim (DE); BELLIN, Ingo, 68159 Mannheim (DE); SPIES, Patrick, 67433 Neustadt (DE); HOFMANN, Maximilian, 68167 Mannheim (DE); DEGLMANN, Peter, 68163 Mannheim (DE); MASSONNE, Klemens, 67098 Bad Dürkheim (DE); DENECKE, Hartmut, 67071 Ludwigshafen (DE); FLECKENSTEIN, Christoph, 63579 Freigericht (DE); JANSSENS, Geert, 67159 Friedelsheim (DE); WAGNER, Jochen, 67112 Mutterstadt (DE); CIESIELSKI, Michael, 06217 Merseburg (DE); DÖRING, Manfred, 76744 Wörth (DE)
(74) Vertreter: BASF IP Association
(86) Internationale Anmeldenummer: PCT/EP2011/054874
(87) Internationale Veröffentlichungsnummer: WO 2011/121001

(56) Entgegenhaltungen:
- EP-A1- 0 806 451
- WO-A1-2011/029901
- DATABASE CA [Online] CHEMICAL ABSTRACTS SERVICE, COLUMBUS, OHIO, US; 7. Oktober 2004 (2004-10-07), ABE, TERUMASA: "Halogen-free fireproofing thermoplastic resin compositions, and their moldings and foams", XP002647261, gefunden im STN Database accession no. 2004:820023 -& JP 2004 277609 A (KANEGAFUCHI CHEMICAL INDUSTRY CO., LTD., JAPAN) 7. Oktober 2004 (2004-10-07)

## Beschreibung

Die Erfindung betrifft ein Flammschutzmittel enthaltend eine Phosphor- und eine Schwefelverbindung, eine Polymerzusammensetzung, insbesondere als Schaumstoff, enthaltend das Flammschutzmittel, Verfahren zur Herstellung der Polymerzusammensetzung und die Verwendung der geschäumten Polymerzusammensetzung als Isoliermaterial.

Die Ausrüstung von Polymeren, insbesondere Schaumstoffen, mit Flammschutzmitteln ist für eine Vielzahl von Anwendungen von Bedeutung, beispielsweise für Polystyrol-Partikelschaumstoffe aus expandierbarem Polystyrol (EPS) oder Polystyrol-Extrusionsschaumstoffplatten (XPS) zum Isolieren von Gebäuden.

Derzeit werden als Flammschutzmittel in Kunststoffen hauptsächlich polyhalogenierte Kohlenwasserstoffe, gegebenenfalls in Kombination mit geeigneten Synergisten, beispielsweise organischen Peroxiden oder stickstoffhaltigen Verbindungen eingesetzt. Ein typischer Vertreter dieser klassischen Flammschutzmittel ist Hexabromcyclododecan (HBCD), welches beispielsweise in Polystyrol Anwendung findet. Aufgrund von Bioakkumulation sowie Persistenz von einigen polyhalogenierten Kohlenwasserstoffen ist es ein großes Bestreben in der Kunststoffindustrie, halogenierte Flammschutzmittel zu substituieren.

Kombinationen von Schwefel mit Brom- und Phosphorverbindungen werden bereits in der DE-A 16 94 945 als Flammschutzmittel für Polystyrolschäume vorgeschlagen.

In der EP-A 0 806 451 sind neben elementaren Schwefel auch Dialkylpolysulfide als Synergisten für phosphororganische Flammschutzmittel zum Einsatz in expandierten (EPS) und expandierten (XPS) Polystyrolschäumen offenbart.

In der WO 2009/035881 sind Phosphor-Schwefel-Verbindungen beschrieben, die gegebenenfalls Di- oder Polysulfidgruppen aufweisen.

Obwohl mit den bekannten Systemen bereits gute Ergebnisse erzielt werden, besteht doch ein breiter Raum für Verbesserungen, insbesondere was die Herstellung, anwendungstechnische Eigenschaften und Wechselwirkungen zwischen verbundenen Zusätzen der zu schützenden Materialen angeht. So müssen z. B. erhöhte Mengen des konventionellen Flammschutzmittels HBCD eingesetzt werden, wenn zusätzlich athermane Stoffe wie Kreide oder Graphit anwesend sind.

Aufgabe ist es daher, weitere Flammschutzmittel bereitzustellen, mit denen zumindest in Teilbereichen Verbesserungen bringen oder die Nachteile der bekannten Systeme vermindern.

Es wurde gefunden, dass Flammschutzmittel, die neben einer organischen Phosphorverbindung ein Di- oder Polysulfid mit aromatischen oder heterocyclischen Endgruppen tragen, insbesondere beim Einsatz in Polymerschäumen hervorgehende Eigenschaften aufweisen.

Gegenstand der Erfindung ist daher ein Flammschutzmittel, enthaltend
a) mindestens eine Schwefelverbindung der Formel (I),

   A¹-(Z¹)ₘ-(S)ₙ-(Z²)ₚ-A² (I)

   wobei die Symbole und Indizes folgende Bedeutungen haben,
   A¹, A² sind gleich oder verschieden C₆-C₁₂-Aryl, Cyclohexyl, Si(OR^{a})₃, ein gesättigter, teilweise ungesättigter oder aromatischer, mono- oder bicyclischer Ring mit 3 bis 12 Ringgliedern, der ein oder mehrer Heteroatome aus der Gruppe N, O und S enthält, und der unsubstituiert oder durch einen oder mehrere Substituenten der Gruppe O, OH, S, SH, COOR^{b}, CONR^{c}R^{d}, C₁-C₁₈-Alkyl, C₁-C₁₈-Alkoxy, C₁-C₁₈-Thioalkyl, C₆-C₁₂-Aryl, C₆-C₁₂-Aryloxy, C₂-C₁₈-Alkenyl, C₂-C₁₈-Alkenoxy, C₂-C₁₈-Alkinyl und C₂-C₁₈-Alkinoxy substituiert ist;
   Z¹ , Z² sind gleich oder verschieden -CO- oder -CS-;
   R^{a} ist C₁-C₁₈-Alkyl;
   R^{b}, R^{c}, R^{d} sind gleich oder verschieden H, C₁-C₁₈-Alkyl, C₆-C₁₂-Aryl oder ein aromatischer, mono- oder bicyclischer Ring mit 3 bis 12 Ringgliedern, der ein oder mehrere Heteroatome aus der Gruppe N, O und S enthält;
   m, p sind gleich oder verschieden 0 oder 1 und
   n ist eine natürliche Zahl von 2 bis 10 und
b) mindestens eine halogenfreie organische Phosphorverbindung mit einem Phosphorgehalt im Bereich von 5 bis 80 Gew.-%, bezogen auf die Phosphorverbindung,
   in einem Gewichtsverhältnis a : b 1 : 10 bis 10 : 1.

Weiterhin Gegenstand der Erfindung ist die Verwendung einer Mischung der Komponenten a) und b) als Flammschutzmittel.

Ein weiterer Gegenstand der Erfindung ist eine Polymerzusammensetzung, bevorzugt ein Polymerschaum, besonders bevorzugt ein Polymerschaum auf Basis eines Styrolpolymers, enthaltend 0,1 bis 15 Gew.-Teile, bezogen auf 100 Gew.-Teile des Polymers, des erfindungsgemäßen Flammschutzmittels.

Ebenso Gegenstand der Erfindung ist ein Verfahren zur Herstellung der erfindungsgemäßen Polymerzusammensetzung, wobei man eine Schmelze des Polymers erzeugt und mit dem erfindungsgemäßen Flammschutzmittel vermischt.

Gegenstand der Erfindung ist auch die Verwendung der erfindungsgemäßen Polymerzusammensetzung als Dämm- und/oder Isoliermaterial insbesondere in der Bauindustrie.

Das erfindungsgemäße Flammschutzmittel zeichnet sich beispielsweise durch eine verbesserte Prozessierbarkeit bei der Herstellung von Schaumstoffen basierend auf Styrolpolymeren aus. Es eignet sich insbesondere zum Schutz von Schäumen mit geringer Dichte.

Vorteilhaft ist es, dass bei Zusatz athermaner Verbindungen die Wirkung als Flammschutzmittel im Allgemeinen nicht beeinflusst wird.

Das erfindungsgemäße Flammschutzmittel enthält ein oder mehrere, vorzugsweise 1 bis 3, besonders bevorzugt 1 Verbindung der Formel (I).

Bevorzugt haben die Symbole und Indizes in der Formel (I) folgende Bedeutungen.
- A¹, A²: sind vorzugsweise gleich oder verschieden Phenyl, Biphenyl, Naphthyl, ein 5- bis 8-gliedriger gesättigter Ring mit ein oder zwei Heteroatomen aus der Gruppe N, S und O, oder ein 5- bis 10-gliedriger, mono- oder bicyclischer aromatischer Ring mit 1 bis 4 Heteroatomen aus der Gruppe N, S und O, wobei die fünf genannten Ringsysteme gleich oder verschieden unsubstituiert oder durch einen oder mehrere Substituenten aus der Gruppe O, OH, C₁-C₁₂-Alkoxy, C₂-C₁₂-Alkenyloxy und COOR^{b} substituiert sind.
- Z¹, Z²: sind vorzugsweise gleich oder verschieden -CO- oder -CS-.
- R^{b}: ist vorzugsweise H, C₁-C₁₂-Alkyl, C₆-C₁₀-Aryl oder ein aromatischer 5- oder 6-gliedriger Ring, der ein oder mehrere Heteroatome aus der Gruppe N, O und S enthält.
- m, p: sind vorzugsweise gleich 0 oder 1.
- n: ist vorzugsweise eine natürliche Zahl von 2 bis 10.

Bevorzugt sind Verbindungen der Formel (I), in denen Symbole und Indizes die bevorzugten Bedeutungen haben.

Besonders bevorzugt haben die Symbole in der Formel (I) folgende Bedeutungen:
A¹, A² sind besonders bevorzugt gleich oder verschieden 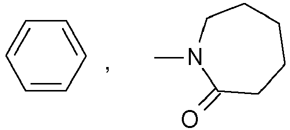 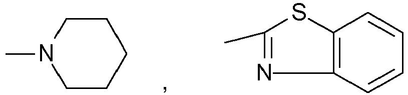 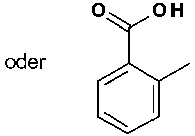
   - Z¹, Z²: sind besonders bevorzugt -CS-.
   - m, p: sind besonders bevorzugt gleich 0 oder 1.
   - n: ist besonders bevorzugt 2, 4 oder 6.

Besonders bevorzugt sind Verbindungen der Formel (I), bei denen alle Symbole und Indizes die besonders bevorzugten Bedeutungen haben.

Ganz besonders bevorzugt sind die folgenden Verbindungen der Formel (I) 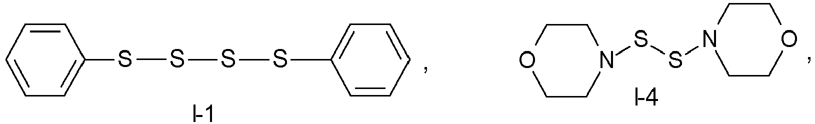 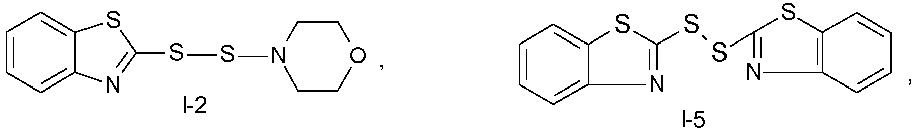 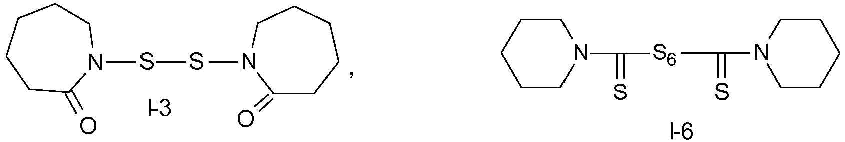 und

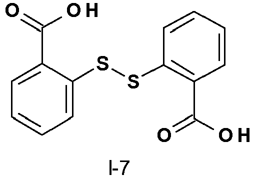

Die Verbindungen der Formel (I) sind bekannt und entweder kommerziell erhältlich oder können nach bekannten, dem Fachmann geläufigen Methoden, wie sie beispielsweise für N-Polysulfide (z.B. I-3 u. I-4) in Houben-Weyl, "Methoden der organischen Chemie", Bd. 11/2, 1958 S. 747 bzw. 749, für Organodisulfide und Diorganodisulfide: (z.B. I-1, I-2, I-5) in Houben-Weyl, "Methoden der organischen Chemie", Bd. E11, 1985 S. 129-149 und für höhere Diorganopolysulfide: (z.B. I-6) in Houben-Weyl, "Methoden der organischen Chemie", Bd. E11, 1985 S. 157 beschrieben sind, hergestellt werden.

Detailliert sind die Synthesen für die oben genannten Verbindungen beschrieben in:
Verbindung I-1: 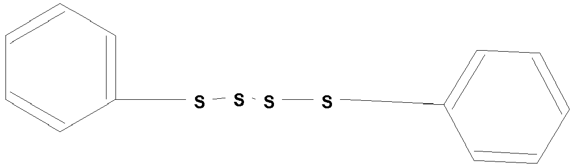 Zysman-Colman, Eli; Harpp, David N.; Journal of Organic Chemistry (2003), 68(6), 2487-2489 .
Verbindung I-2:

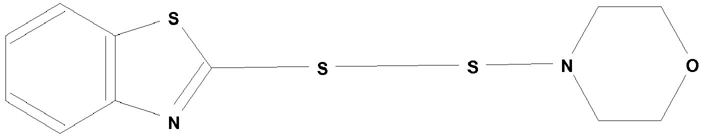

Bergfeld, Manfred; Eisenhuth, Ludwig. (Akzo Patente Gmbh, Germany). Ger. Offen. (1992), DE 4032680 A1 19920416.
Verbindung I-3:

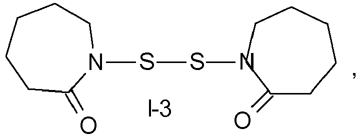

Kommerziell erhältlich, z.B. von der RASCHIG GmbH, Ludwigshafen, Deutschland.
Verbindung I-4:

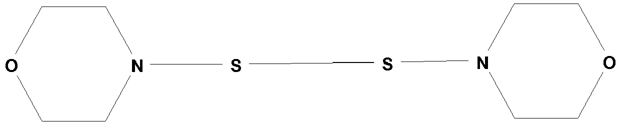

Sun, Ranfeng; Zhang, Yonglin; Chen, Li; Li, Yongqiang; Li, Qingshan; Song, Haibin; Huang, Runqiu; Bi, Fuchun; Wang, Qingmin. Journal of Agricultural and Food Chemistry (2009), 57(9), 3661-3668.
Verbindung I-5:

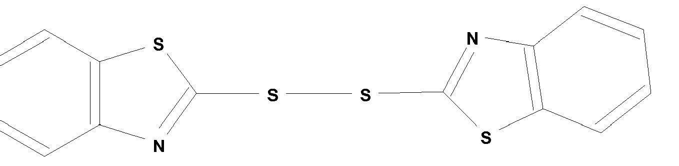

Naimi-Jamal, M. Reza; Hamzeali, Hamideh; Mokhtari, Javad; Boy, Jurgen; Kaupp, Gerd.; ChemSusChem (2009), 2(1), 83-88,
sowie in
Ozen, Recep; Aydin, Fatma; Monatshefte für Chemie (2006), 137(3), 307-310.

### Verbindung I-6:

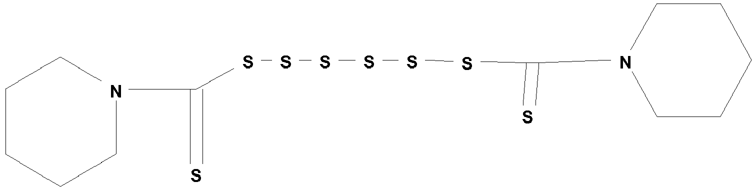

Yoshigaki, Satoru; Anzai, Kunitomo; Kawasaki, Tsuneo. (Ouchi Shinko Chemical Industrial Co., Ltd., Japan). Jpn. Kokai Tokkyo Koho (1989) JP 01261361 A 19891018 , sowie in:
Levi, T. G. Gazzetta Chimica Italiana (1931), 61 373-82.

### Verbindung I-7:

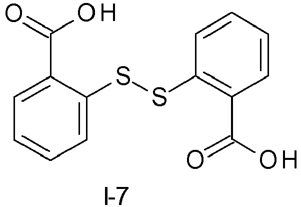

Kommerziell erhältlich, z.B. von der Sigma-Aldrich Chemie GmbH, Steinheim, Deutschland.

Das Gewichtverhältnis von Schwefelverbindung(en) a) zu Phosphorverbindung(en) b) beträgt 1 : 10 - 10 :1, bevorzugt 1 : 6 - 6 :1, besonders bevorzugt 1 : 3 - 3 : 1.

Als Komponente b) enthält das erfindungsgemäße Flammschutzmittel eine oder mehrere, vorzugsweise 1 bis 3, besonders bevorzugt 1 oder 2, insbesondere 1, Phosphorverbindung mit einem Phosphorgehalt im Bereich von 5 bis 80 Gew.-%, bezogen auf Phosphorverbindung.

Bevorzugt sind Phosphorverbindungen der Formel (II),

(x¹=)ₛPR¹R²R³ (II)

wobei die Symbole und Indizes in der Formel (II) folgende Bedeutungen haben:
- R¹: ist C₁-C₁₆-Alkyl, C₁-C₁₀-Hydroxyalkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR⁹, COR¹⁰, COOR¹¹, CONR¹²R¹³;
- R²: ist C₁-C₁₆-Alkyl, C₁-C₁₀-Hydroxyalkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryl-C₁-C₁₆-Alkyl, C₆-C₁₀-Aryl-C₁-C₁₆-Alkoxy, SR⁹, COR¹⁰, COOR¹¹, CONR¹²R¹³;
- R³: ist H, SH, SR⁴, OH, OR⁵ oder eine Gruppe -(Y¹)ₙ-[P(= X²)ᵤR⁶-(Y²)ₙ]ₘ-P(= X³)ₜR⁷R⁸;
oder zwei Gruppen R¹, R², R³ bilden zusammen mit dem Phosphoratom, an das sie gebunden sind, ein Ringsystem;
- X¹, X², X³: sind gleich oder verschieden unabhängig voneinander O oder S;
- Y¹, Y²: sind gleich oder verschieden O oder S;
- R⁴, R⁵, R⁹, R¹⁰, R¹¹, R¹², R¹³: sind gleich oder verschieden C₁-C₁₂-Alkyl, C₃-C₈-Cycloalkyl, das unsubstituiert oder durch eine oder mehrere C₁-C₄-Alkylgruppen substituiert ist, C₂-C₁₂-Alkenyl, C₂-C₁₂-Alkinyl, C₆-C₁₀-Aryl oder C₆-C₁₀-Aryl-C₁-C₄-alkyl;
- R⁶, R⁷, R⁸: sind gleich oder verschieden unabhängig voneinander C₁-C₁₆-Alkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR⁹, COR¹⁰, COOR¹¹, CONR¹²R¹³;
- n: ist 0 oder 1, falls Y¹ bzw. Y² O ist, und 1, 2, 3, 4, 5, 6, 7 oder 8, falls Y¹ bzw. Y² S ist, und
- m: ist eine ganze Zahl von 0 bis 100;
- s, t, u: sind unabhängig voneinander 0 oder 1.

Bevorzugt haben die Symbole und Indizes der Formel (II) folgende Bedeutungen:
- R¹: ist bevorzugt C₁-C₁₆-Alkyl, C₁-C₁₀-Hydroxyalkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy.
- R²: ist bevorzugt C₁-C₁₆-Alkyl, C₁-C₁₀-Hydroxyalkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryl-C₁-C₁₆-Alkyl, C₆-C₁₀-Aryl-C₁-C₁₆-Alkoxy.
- R³: ist bevorzugt H, SH, SR⁴, OH, OR⁵ oder eine Gruppe: -(Y¹)ₙ-[P(= X²)ᵤR⁶-(Y²)ₙ]ₘ-P(= X³)ₜR⁷R⁸.
- X¹, X² und X³: sind bevorzugt gleich oder verschieden unabhängig voneinander O oder S.
- Y¹, Y²: sind bevorzugt gleich oder verschieden O oder S.
- R⁴, R⁵: sind bevorzugt gleich oder verschieden C₁-C₁₂-Alkyl, C₃-C₈-Cycloalkyl, das unsubstituiert oder durch eine oder mehrere C₁-C₄-Alkylgruppen substituiert ist, C₂-C₁₂-Alkenyl, C₂-C₁₂-Alkinyl, C₆-C₁₀-Aryl oder C₆-C₁₀-Aryl-C₁-C₄-alkyl.
- R⁶, R⁷, R⁸: sind bevorzugt gleich oder verschieden unabhängig voneinander C₁-C₁₆-Alkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR⁹, COR¹⁰, COOR¹¹, CONR¹²R¹³.
- n: ist bevorzugt 1, falls Y¹ bzw. Y² O ist, und 1 oder 2, falls Y² S ist und
- m: ist bevorzugt eine ganze Zahl von 0 bis 10.
- s, t, u: sind bevorzugt 1.

Bevorzugt sind Verbindungen der Formel (II), in denen alle Symbole und Indizes die bevorzugten Bedeutungen haben.

Bevorzugt sind auch Verbindungen der Formel (II), in denen zwei Reste R¹, R², R³ zusammen kein Ringsystem bilden.

Besonders bevorzugt haben die Symbole und Indizes in der Formel (II) folgende Bedeutungen:
- R¹: ist besonders bevorzugt C₁-C₈-Alkyl, C₁-C₈-Alkoxy, Cyclohexyl, Phenyl, Phenoxy, Benzyl, Benzyloxy.
- R²: ist besonders bevorzugt C₁-C₈-Alkyl, C₁-C₈-Alkoxy, Cyclohexyl, Phenyl, Benzyl, Benzyloxy.
- R³: ist besonders bevorzugt H, SH, SR⁴, OH, OR⁵ oder eine Gruppe -(Y¹)ₙ-P(= X³)ₜR⁷R⁸.
- X¹ und X³: sind besonders bevorzugt gleich oder verschieden O oder S.
- Y¹: ist besonders bevorzugt O oder S.
- R⁴, R⁵: sind besonders bevorzugt gleich oder verschieden C₁-C₈-Alkyl, Cyclohexyl, Phenyl oder Benzyl.
- R⁷, R⁸: sind besonders bevorzugt gleich oder verschieden C₁-C₈-Alkyl, C₁-C₈-Alkoxy, Cyclohexyl, Phenyl, Phenoxy, Benzyl und Benzyloxy.
- n: ist besonders bevorzugt 1, falls Y¹ O ist, und 1 oder 2, falls Y¹ S ist.
- s und t: sind besonders bevorzugt 1.

Besonders bevorzugt sind Verbindungen der Formel (II), bei denen die Symbole und Indizes die besonders bevorzugten Bedeutungen haben.

Insbesondere bevorzugt haben die Symbole und Indizes in der Formel (II) folgende Bedeutungen:
- R¹: ist insbesondere bevorzugt Phenyl, Phenoxy.
- R²: ist insbesondere bevorzugt Phenyl.
- R³: ist insbesondere bevorzugt H, SH, SR⁴, OH, OR⁵ oder eine Gruppe -(Y¹)ₙ-P(= X³)ₜR⁷R⁸.
- X¹ und X³: sind insbesondere bevorzugt gleich oder verschieden O oder S.
- Y¹: ist insbesondere bevorzugt O oder S.
- R⁴, R⁵: sind insbesondere bevorzugt gleich oder verschieden Cyclohexyl, Phenyl oder Benzyl.
- R⁷, R⁸: sind insbesondere bevorzugt gleich oder verschieden Phenyl, Phenoxy.
- n: ist insbesondere bevorzugt 1, falls Y¹ O ist, und 1 oder 2, falls Y¹ S ist.
- s und t: sind insbesondere bevorzugt 1.

Insbesondere bevorzugt sind Verbindungen der Formel (II), in denen die Symbole und Indizes die insbesondere bevorzugten Bedeutungen haben.

Weiterhin bevorzugt sind folgende Gruppen von Verbindungen der Formel (II):

S=PR¹R²-H (IIa)

S=PR¹R²-SH (IIb)

S=PR¹R²-OH (IIc)

S=PR¹R²-S-Phenyl (IId)

S=PR¹R²-O-Phenyl (IIe)

S=PR¹R²-S-Benzyl (IIf)

S=PR¹R²-O-Benzyl (IIg)

S=PR¹R²-P(= S)R⁷R⁸ (IIh)

S=PR¹R²-S-P(= S)R⁷R⁸ (IIi)

S=PR¹R²-S-S-P(= S)R⁷R⁸ (IIj)

S=PR¹R²-O-P(= S)R⁷R⁸ (IIk)

O=PR¹R²-H (IIl)

O=PR¹R²-SH (IIm)

O=PR¹R²-OH (IIn)

O=PR¹R²-S-Phenyl (IIo)

O=PR¹R²-O-Phenyl (IIp)

O=PR¹R²-S-Benzyl (IIq)

O=PR¹R²-P(=S)R⁷R⁸ (IIr)

O=PR¹R²-S-P(=S)R⁷R⁸ (IIs)

O=PR¹R²-S-S-P(=S)R⁷R⁸ (IIt)

O=PR¹R²-O-P(=S)R⁷R⁸ (IIu)

O=PR¹R²-P(=O)R⁷R⁸ (IIv)

O=PR¹R²-S-P(=O)R⁷R⁸ (IIw)

O=PR¹R²-S-S-P(=O)R⁷R⁸ (IIx)

O=PR¹R²-O-P(=O)R⁷R⁸ (IIy)

wobei die Symbole die in der Formel (I) angegebenen Bedeutungen haben.

Insbesondere bevorzugt sind die folgenden Komponenten b),

| | |
|---|---|
| 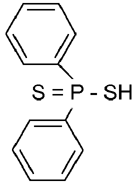 | Diphenyldithiophosphinsäure |
| 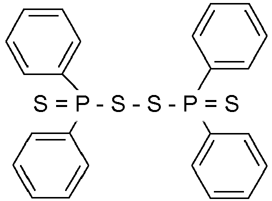 | Bis(diphenylphosphinthioyl)disulfid |
| 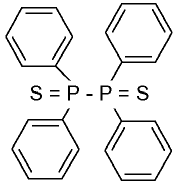 | 1,1,2,2-Tetraphenyldiphosphindisulfid |
| O=P(O-Ph)₃ | Triphenylphosphat |

Weiterhin bevorzugte Phosphorverbindungen sind solche der Formel (III), 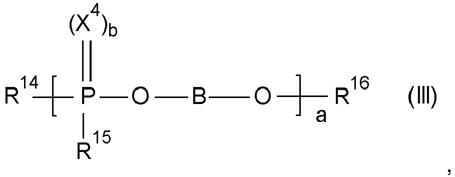 wobei die Symbole und Indizes in der Formel (III) folgende Bedeutungen haben:
- B: ist eine Gruppe

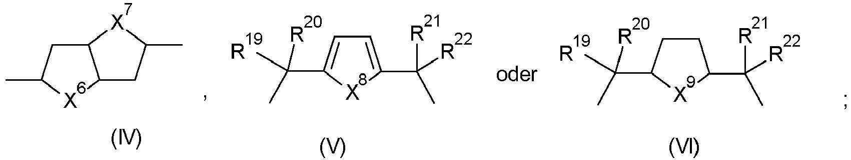

- R¹⁶: ist -P(=X⁵)_{c}R¹⁷R¹⁸, H, eine geradkettige oder verzweigte C₁-C₁₂-Alkylgruppe, C₅-C₆-Cycloalkyl, C₆-C₁₂-Aryl, Benzyl, wobei die vier letztgenannten Gruppen unsubstituiert oder durch einen oder mehrere Reste aus der Gruppe C₁-C₄-Alkyl und C₂-C₄-Alkenyl substituiert sind;
- R¹⁴ R¹⁵ R¹⁷ und R¹⁸: sind gleich oder verschieden Wasserstoff, OH, C₁-C₁₆-Alkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR²³, COR²⁴, COOR²⁵, CONR²⁶R²⁷ oder zwei Reste R¹⁴, R¹⁵, R¹⁷, R¹⁸ bilden zusammen mit dem Phosphoratom, an das sie gebunden sind, oder einer Gruppe P-O-B-O-P ein Ringsystem;
- R¹⁹, R²⁰, R²¹, R²²: sind gleich oder verschieden H, C₁-C₁₆-Alkyl, C₂-C₁₆-Alkenyl, C₁-C₁₆-Alkoxy, C₂-C₁₆-Alkenoxy;
- R²³, R²⁴, R²⁵, R²⁶, R²⁷: sind gleich oder verschieden H, C₁-C₁₆-Alkyl, C₂-C₁₆-Alkenyl, C₆-C₁₀-Aryl, C₆-C₁₀-Aryl-C₁-C₁₆-Alkyl, C₆-C₁₀-Aryl-C₁-C₁₆-Alkoxy;
- X⁴, X⁵: sind gleich oder verschieden S oder O;
- b, c: sind gleich oder verschieden, vorzugsweise gleich, 0 oder 1;
- X⁶, X⁷, X⁸, X⁹: sind gleich oder verschieden S oder O und
- a: ist eine natürliche Zahl von 1 bis 50.

Bevorzugt haben die Symbole in der Formel (III) folgende Bedeutung:
B ist bevorzugt eine Gruppe der Formel (IV), (V) oder (VI).
R¹⁶ ist bevorzugt (X⁵)ᵣPR¹⁷R¹⁸ oder H.
R¹⁴, R¹⁵ R¹⁷, R¹⁸ sind bevorzugt gleich oder verschieden C₆-C₁₀-Aryl, C₆-C₁₀-Aryloxy, C₆-C₁₀-Aryl-C₁-C₁₆-Alkyl oder C₆-C₁₀-Aryl-C₁-C₁₆-Alkoxy.
R¹⁵, R²⁰, R²¹, R²² sind bevorzugt H, C₁-C₁₆-Alkyl, C₂-C₁₆-Alkenyl, C₁-C₁₆-Alkoxy, C₂-C₁₆-Alkenoxy,
X⁴, X⁵ sind bevorzugt gleich oder verschieden S oder O.
b, c sind bevorzugt gleich 0 oder 1.
X⁶, X⁷, X⁸, X⁹ sind bevorzugt O.
a ist bevorzugt eine natürliche Zahl von 1 bis 30.

Bevorzugt sind Verbindungen der Formel (III), in denen alle Symbole die bevorzugten Bedeutungen haben.

Besonders bevorzugt haben die Symbole in der Formel (III) folgende Bedeutung:
B ist besonders bevorzugt eine Gruppe der Formel (IV), (V) oder (VI).
R¹⁶ ist besonders bevorzugt (X⁵)ᵣPR¹⁷R¹⁸.
R¹⁴, R¹⁵ R¹⁷, R¹⁸ sind besonders bevorzugt gleich oder verschieden Phenyl, Phenoxy, Phenyl-C₁-C₁₆-Alkyl, Phenyl-C₁-C₁₆-Alkoxy.
R¹⁹, R²⁰, R²¹, R²² sind besonders bevorzugt H.
X⁴, X⁵ sind besonders bevorzugt gleich oder verschieden S oder O.
b, c sind besonders bevorzugt gleich O oder S.
X⁶, X⁷, X⁸, X⁹ sind besonders bevorzugt O.
a ist besonders bevorzugt 1.

Besonders bevorzugt sind Verbindungen der Formel (III), in denen alle Symbole und Indizes die besonders bevorzugten Bedeutungen haben.

Bevorzugt sind Verbindungen der Formel (III), in denen R¹⁴ und R¹⁵ gleich sind.

Weiterhin bevorzugt sind Verbindungen der Formel (III), in denen R¹⁴ und R¹⁷ oder R¹⁴ und R¹⁸ gleich sind. Weiter besonders bevorzugt sind Verbindungen der Formel (III), in denen R¹⁵ und R¹⁷ oder R¹⁵ und R¹⁸ gleich sind.

Weiter bevorzugt sind Verbindungen, in denen R¹⁴, R¹⁵, R¹⁷ und R¹⁸ gleich sind.

Insbesondere bevorzugt haben die Symbole und Indizes in der Formel (III) folgende Bedeutung:
B ist insbesondere bevorzugt eine Gruppe der Formel (IV), (V) oder (VI).
R¹⁶ ist insbesondere bevorzugt (X⁵)ᵣPR¹⁷R¹⁸.
R¹⁴, R¹⁵ R¹⁷, R¹⁸ sind insbesondere bevorzugt gleich Phenyl oder Phenoxy.
R¹⁹, R²⁰, R²¹, R²² sind insbesondere bevorzugt H.
X⁴, X⁵ sind insbesondere bevorzugt gleich S oder O.
b, c sind insbesondere bevorzugt gleich 0 oder 1.
X⁶, X⁷, X⁸, X⁹ sind insbesondere bevorzugt Sauerstoff.
a ist insbesondere bevorzugt 1.

Insbesondere bevorzugt sind Verbindungen der Formel (III), in denen alle Symbole und Indizes die insbesondere bevorzugten Bedeutungen haben.

Bevorzugt sind Verbindungen der Formel (III), in denen jeweils zwei der Reste R¹⁴, R¹⁵, R¹⁷, R¹⁸ zusammen mit dem Phosphoratom, an das sie gebunden sind, oder der Gruppe P-O-B-O-P ein drei- bis zwölfgliedriges Ringsystem bilden.

Bevorzugt sind weiterhin Verbindungen der Formel (III), in denen zwei Reste R¹⁴, R¹⁵, R¹⁷, R¹⁸ zusammen kein Ringsystem bilden.

Weiterhin insbesondere bevorzugt sind die folgenden Verbindungen:

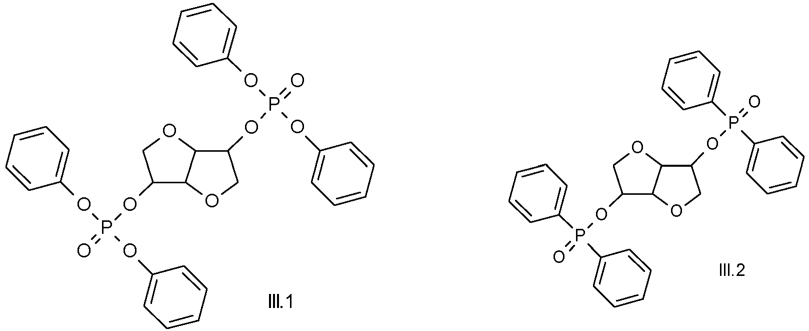

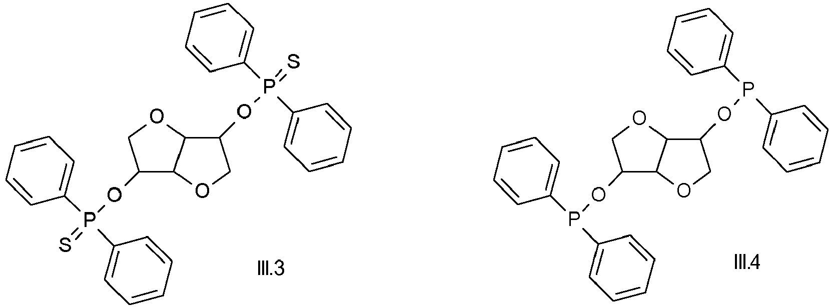

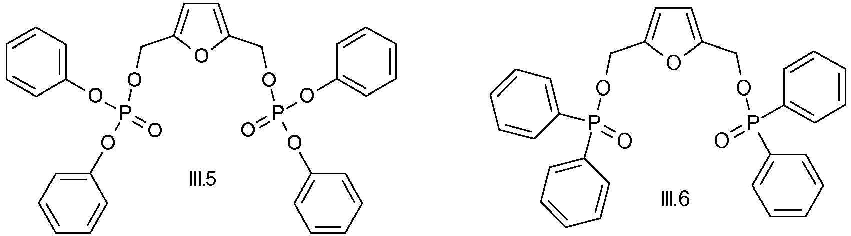

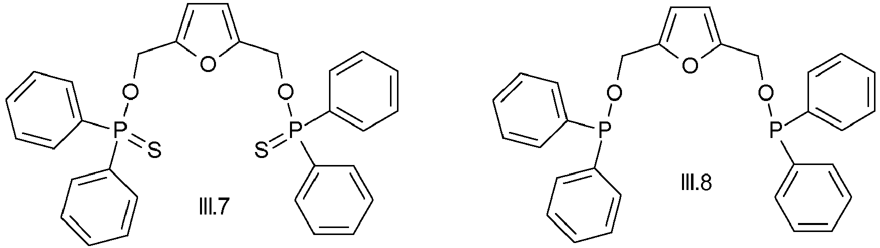

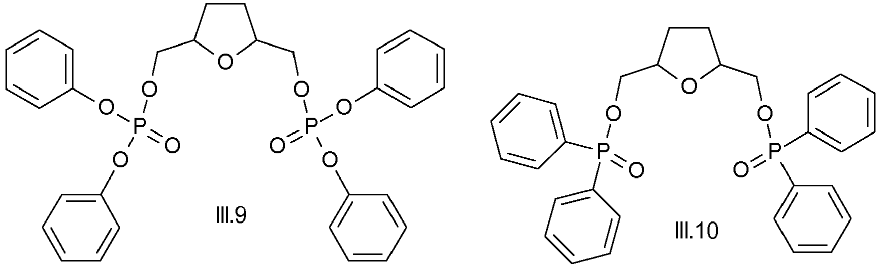

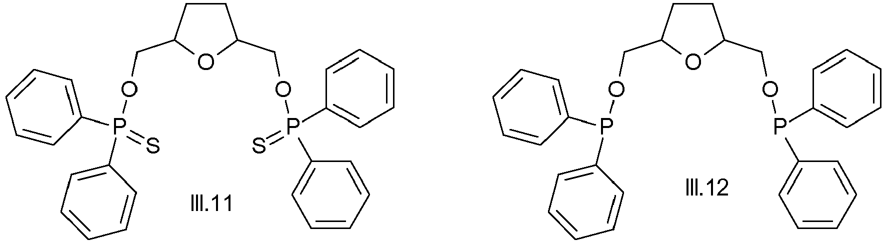

Die Verbindungen der Formel (III) sind teilweise aus der Literatur bekannt. Die Synthese gelingt beispielsweise durch Umsetzung der entsprechenden furan- oder thiophenbasierten Diolgrundkörper mit Chlorphosphorverbindungen in Gegenwart einer Base. Der hier zugrundeliegende Reaktionstyp der Umsetzung von Chlorphosphorverbindungen mit Alkoholen ist in der Literatur weitreichend bekannt [siehe z.B. WO-A 2003/062251; Dhawan, Bairam; Redmore, Derek, J. Org. Chem. (1986), 51(2), 179-83; WO 96/17853; Kumar, K. Ananda; Kasthuraiah, M.; Reddy, C. Suresh; Nagaraju, C, Heterocyclic Communications (2003), 9(3), 313-318; Givelet, Cecile; Tinant, Bernard; Van Meervelt, Luc; Buffeteau, Thierry; Marchand-Geneste, Nathalie; Bibal, Brigitte. J. Org. Chem. (2009), 74(2), 652-659.]

Die furan- oder thiophenbasierten Diol-Grundkörper sind größtenteils kommerziell erhältlich oder können leicht nach literaturbekannten Methoden ausgehend von Zuckern dargestellt werden [siehe z.B.: WO 2006/063287 (Darstellung von 2,5-Bis(hydroxymethyl)tetrahydrofuran); Cottier, Louis; Descotes, Gerard; Soro, Yaya. Synth. Comm. (2003), 33(24), 4285 - 4295), (Darstellung von 2,5-Bis(hydroxymethyl)furan); CA 2196632, Katritzky, Alan R.; Zhang, Zhongxing; Lang, Hengyuan; Jubran, Nusrallah; Leichter, Louis M.; Sweeny, Norman. J. Heterocycl. Chem. (1997), 34(2), 561-565].

Auch die Darstellung von in 2,5-Position substituierten furanbasierten Derivaten ist in der Literatur wohlbekannt (R⁵-R⁸ ganz oder teilweise gleich oder verschieden ungleich H):
- z.B. die Darstellung α2,α5-arylierter 2,5-Bis(hydroxymethyl)furane: Ishii, Akihiko; Horikawa, Yasuaki; Takaki, Ikuo; Shibata, Jun; Nakayama, Juzo; Hoshino, Masamatsu, Tetrahedron Lett. (1991), 32(34), 4313-16; Jang, Yong-Sung; Kim, Han-Je; Lee, Phil-Ho; Lee, Chang-Hee. Tetrahedron Lett. (2000), 41(16), 2919-2923, oder
- z.B. die Darstellung α2,α5-alkylierter 2,5-Bis(hydroxymethyl)furane: Krauss, Juergen; Unterreitmeier, Doris; Antlsperger, Dorothee, Archiv der Pharmazie, (2003), 336(8), 381-384.
- z.B. die Darstellung α2,α5-alkylierter 2,5-Bis(hydroxymethyl)tetrahydrofurane: Walba, D. M.; Wand, M. D.; Wilkes, M. C., J. Am. Chem. Soc., (1979), 101(15), 4396-4397.
   z.B. die Darstellung α2,α5-alkenylierter 2,5-Bis(hydroxymethyl)tetrahydrofurane: Morimoto, Yoshiki; Kinoshita, Takamasa; Iwai, Toshiyuki, Chirality (2002), 14(7), 578-586.

Auch die Synthese in 2,5-Position unsymmetrisch substituierter furanbasierender Diole dieser Art ist literaturbekannt, z.B. die Darstellung α2-alkylierter 2,5-Bis(hydroxy-methyl)tetrahydrofurane: Donohoe, Timothy J.; Williams, Oliver; Churchill, Gwydian H, Angew. Chem. Int. Ed. (2008), 47(15), 2869-2871; oder die Synthese α2-alkylierter, α5 alkinylierter 2,5-Bis(hydroxymethyl)tetrahydrofurane: Abe, Masato; Kubo, Akina; Yamamoto, Shuhei; Hatoh, Yoshinori; Murai, Masatoshi; Hattori, Yasunao; Makabe, Hidefumi; Nishioka, Takaaki; Miyoshi, Hideto. Biochemistry (2008), 47(23), 6260-6266;
oder die Darstellung α2,alkoxylierter 2,5-Bis(hydroxymethyl)furane: Lu, Dan; Li, Pingya; Liu, Jinping; Li, Haijun, CN 101544624 A.

Auch ist die Synthese der Thioanaloga (X=S) von (II) ist literaturbekannt [vgl. Kuszmann, J.; Sohar, P., Carbohydrate Research (1972), 21(1), 19-27].

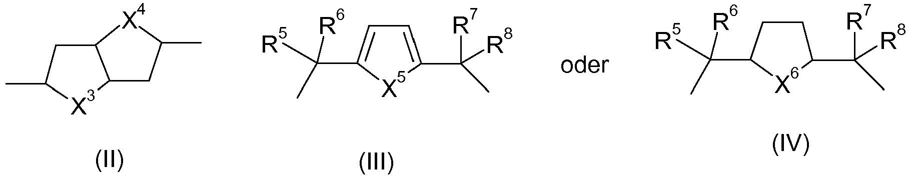

Ebenso ist die Synthese der Thioanaloga (X=S) von (**III**) [vgl. Garrigues, Bernard, Phosphorus, Sulfur and Silicon (1990), 53(1-4), 75-9] bzw. substituierter Thioanaloga von **III**, z.B. α2,α5-arylierter 2,5-Bis(hydroxymethyl)thiophene bekannt [vgl. Kumaresan, D.; Agarwal, Neeraj; Gupta, Iti; Ravikanth, M. Tetrahedron (2002), 58(26), 5347-5356.]

Weiterhin ist die Synthese der Thioanaloga (X=S) von (**IV**) beschrieben [vgl. Luttringhaus, A.; Merz, H. Archiv der Pharmazie und Berichte der Deutschen Pharmazeutischen Gesellschaft (1960), 293 881-890.] bzw. substituierter Thioanaloga von **IV,** z.B. α2,α5-alkylierter 2,5-Bis(hydroxymethyl)tetrahydrothiophene bekannt [vgl. Block, Eric; Ahmad, Saleem. Phosph. Sulfur and the Related Elements (1985), 25(2), 139-145.]

Die furan- oder thiophenbasierten Diole liegen teilweise in enantiomeren- bzw. diastereomerenreiner Form vor. Die furan- oder thiophenbasierten Diole können in Form ihrer reinen Enantiomere oder Diastereomere eingesetzt werden. Bevorzugt sind jedoch Mischungen der respektiven Konfigurationsisomere.

Die zur Synthese der Flammschutzagonisten notwendigen Chlorphosphorderivate sind üblicherweise kommerziell erhältlich oder lassen sich über in der Literatur gut bekannte Synthesewege darstellen [vgl. Science of Synthesis (former Houben Weyl) 42 (2008**)**; Houben Weyl E1-2 (1982**)**; Houben Weyl 12 (1963-1964**)**].

Das erfindungsgemäße Flammschutzmittel wird in der Regel in einer Menge im Bereich von 0,2 bis 10 Gew.-Teile, bezogen auf das Polymer, eingesetzt. Mengen von 2 - 15 Gew.- Teile, bezogen auf das Polymer, bevorzugt 2,5 - 10 Gew.- Teile, bezogen auf das Polymer, gewährleisten insbesondere bei Schaumstoffen aus expandierbaren Styrolpolymeren einen ausreichenden Flammschutz.

Die Angabe von Gewichtsteilen bezieht sich dabei im Rahmen dieser Anmeldung - soweit nicht anders angegeben - stets auf 100 Gew.-Teile der Verbindung, insbesondere des Polymers, das flammhemmend ausgerüstet wird, ohne Berücksichtigung von etwaigen Additiven.

Die Wirksamkeit des erfindungsgemäßen Flammschutzmittels kann durch den Zusatz weiterer geeigneter Flammschutzsynergisten, wie die thermischen Radikalbildner Dicumylperoxid, Di-tert-butylperoxid oder Dicumyl, noch weiter verbessert werden. In diesem Falle werden üblicherweise 0,05 bis 5 Gew.- Teile des Flammschutzsynergisten, bezogen auf das Polymer, eingesetzt.

Auch können zusätzlich weitere Flammschutzmittel, wie Melamin, Melamincyanurate, Metalloxide, Metallhydroxide, Phosphate, Phosphonate, Phosphinate, Blähgraphit oder Synergisten, wie Sb₂O₃, Sn-Verbindungen oder Nitroxyl-Radikale enthaltende oder freisetzende Verbindungen, eingesetzt werden. Geeignete zusätzliche halogenfreie Flammschutzmittel sind beispielsweise im Handel unter der Bezeichnung Exolit OP 930, Exolit OP 1312, HCA-HQ, Cyagard RF-1243, Fyrol PMP, Phoslite IP-A, Melapur 200, Melapur MC und Budit 833 erhältlich.

Falls auf die vollständige Halogenfreiheit verzichtet werden kann, können halogenreduzierte Materialien durch die Verwendung des erfindungsgemäßen Flammschutzmittels und den Zusatz geringerer Mengen an halogenhaltigen, insbesondere bromierten Flammschutzmitteln, wie Hexabromcyclododecan (HBCD) oder bromierten Styrolhomo- bzw. Styrolcopolymeren/-oligomeren (z.B. Styrol-Butadien-Copolymeren, wie in WO-A 2007/058736 beschrieben), bevorzugt in Mengen im Bereich von 0,05 bis 1, insbesondere 0,1 bis 0,5 Gew.- Teile (bezogen auf das Polymer), hergestellt werden.

In einer bevorzugten Ausführungsform ist das erfindungsgemäße Flammschutzmittel halogenfrei.

Besonders bevorzugt ist die Zusammensetzung aus Polymer, Flammschutzmittel und weiteren Zusatzstoffen halogenfrei.

Das erfindungsgemäße Flammschutzmittel, d.h. die Kombination der Komponenten a und b allein und/oder in Mischung mit Synergisten und/oder in Mischung mit weiteren flammhemmenden Substanzen, wird erfindungsgemäß für die Herstellung flammhemmend ausgerüsteter Materialien, bevorzugt ungeschäumter und/oder geschäumter Polymere, insbesondere thermoplastischer Polymere, verwendet. Hierfür wird das Flammschutzmittel vorzugsweise physikalisch mit dem entsprechenden Polymer in der Schmelze vermischt und dann als Polymermischung mit Phosphorgehalten zwischen 0,05 Gew.- Teile und 5 Gew.- Teile (bezogen auf das Polymer) zunächst fertig konfektioniert und dann in einem zweiten Verfahrensschritt zusammen mit demselben oder mit einem anderen Polymer weiterverarbeitet.

Gegenstand der Erfindung ist auch eine, vorzugsweise thermoplastische, Polymerzusammensetzung, enthaltend ein erfindungsgemäßes Flammschutzmittel, (A) und eine Polymerkomponente (B).

Als thermoplastisches Polymer können beispielsweise geschäumte oder ungeschäumte Styrolpolymere, einschließlich ABS, ASA, SAN, AMSAN, Polyester, Polyimide, Polysufone, Polyolefine wie Polyethylen und Polypropylen, Polyacrylate, Polyetheretherketone, Polyurethane, Polycarbonate, Polyphenylenoxide, ungesättigte Polyesterharze, Phenolharze, Polyamide, Polyethersulfone, Polyetherketone und Polyethersulfide, jeweils einzeln oder in Mischung als Polymerblends eingesetzt werden.

Bevorzugt sind geschäumte oder ungeschäumte Styrolhomopolymere und -copolymere jeweils einzeln oder in Mischung als Polymerblends.

Bevorzugt sind flammgeschützte Polymerschaumstoffe, insbesondere auf Basis von Styrolpolymeren, vorzugsweise EPS und XPS.

Die flammgeschützten Polymerschaumstoffe weisen bevorzugt eine Dichte im Bereich von 5 bis 150 kg/m³, besonders bevorzugt im Bereich von 10 bis 50 kg/m³, auf. Sie sind bevorzugt zu mehr als 80 %, besonders bevorzugt zu 90 bis 100 % geschlossenzellig.

Die erfindungsgemäßen flammgeschützten, expandierbaren Styrolpolymere (EPS) und Styrolpolymerextrusionsschaumstoffe (XPS) können durch Einmischen eines Treibmittels und des erfindungsgemäßen Flammschutzmittels in die Polymerschmelze und anschließende Extrusion und Granulierung unter Druck zu expandierbaren Granulaten (EPS) oder durch Extrusion und Entspannung unter Verwendung entsprechend geformter Düsen zu Schaumstoffplatten (XPS) oder Schaumstoffsträngen verarbeitet werden.

Erfindungsgemäß umfasst der Begriff Styrolpolymer Polymere, auf Basis von Styrol, alpha-Methylstyrol oder Mischungen von Styrol und alpha-Methylstyrol; analog gilt dies für den Styrolanteil in SAN, AMSAN, ABS, ASA, MBS und MABS (siehe unten).

In einer bevorzugten Ausführungsform ist der Schaumstoff ein expandierbares Polystyrol (EPS).

In einer weiteren bevorzugten Ausführungsform ist der Schaumstoff ein Styrolpolymerextrusionsschaumstoff (XPS),

Bevorzugt weisen expandierbare Styrolpolymere ein Molekulargewicht M_{w} im Bereich von 120.000 bis 400.000 g/mol, besonders bevorzugt im Bereich von 180.000 bis 300.000 g/mol, gemessen mittels Gelpermeationschromatographie mit refraktiometrischer Detektion (RI) gegenüber Polystyrolstandards, auf. Aufgrund des Molekulargewichtsabbaus durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-a-Methstyrol-copolymere, Acrylnitril-Butadien-Styrolpolymerisate (ABS), Styrol-Acrylnitril-Copolymere (SAN), Acrylnitril-alpha-Methylstyrol-Copolymere (AMSAN), Acrylnitril-Styrol-Acrylester (ASA), Methyacrylat-Butadien-Styrol (MBS), Methylmethacrylat-Acrylnitril-Butadien-Styrol (MABS)-polymerisate oder Mischungen davon oder mit Polyphenylenether (PPE) eingesetzt.

Die genannten Styrolpolymere können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Des weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, Epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt. Für XPS wird bevorzugt CO₂ oder dessen Mischungen mit Alkoholen und/oder C₂-C₄-Carbonylverbindungen, insbesondere Ketonen, eingesetzt.

Zur Verbesserung der Verschäumbarkeit können feinverteilte Innenwassertröpfchen in die Styrolpolymermatrix eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden. In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen a, definiert als Schüttdichte vor dem Verschäumen/Schüttdichte nach dem Verschäumen höchstens 125 bevorzugt 15 bis 100 aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des Weiteren können der Styrolpolymerschmelze Additive, Keimbildner, Füllstoffe, Weichmacher, lösliche und unlösliche anorganische und/oder organische Farbstoffe und Pigmente, z.B. athermane Stoffe, d.h. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-Teilen zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B. Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.-Teile, bezogen auf das Styrolpolymerisat, eingesetzt werden können.

Zur Herstellung der erfindungsgemäßen expandierbaren Styrolpolymerisate kann das Treibmittel in die Polymerschmelze eingemischt werden. Ein mögliches Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor- Extruder- Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Besonders bevorzugt wird ein Verfahren zur Herstellung von halogenfrei flammgeschützten, expandierbaren Styrolpolymeren (EPS), umfassend die Schritte
a) Einmischen eines organischen Treibmittels und 1-25 Gew.-% des erfindungsgemäßen Flammschutzmittels in die Polymerschmelze mittels statischen oder dynamischen Mischer bei einer Temperatur von mindestens 150°C,
b) Kühlen der treibmittelhaltigen Styrolpolymerschmelze auf eine Temperatur von mindestens 120°C
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

Es ist auch möglich, die erfindungsgemäßen, expandierbaren Styrolpolymeren (EPS) durch Suspensionspolymerisation in wässriger Suspension in Gegenwart des erfindungsgemäßen Flammschutzmittels und eines organischen Treibmittels herzustellen.

Bei der Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylether oder alpha-Methylstyrol ersetzt sein.

Bei der Suspensionspolymerisation können die üblichen Hilfsmittel, wie z.B. Peroxidinitiatoren, Suspensionsstabilisatoren, Treibmittel, Kettenüberträger, Expandierhilfsmittel, Keimbildner und Weichmacher zugesetzt werden. Das erfindungsgemäße Flammschutzmittel wird bei der Polymerisation in Mengen von 0,5 bis 25 Gew.-%, vorzugsweise von 5 bis 15 Gew.-%, zugesetzt. Treibmittel werden in Mengen von 3 bis 10 Gew.-%, bezogen auf Monomer zugesetzt. Man kann sie vor, während oder nach der Polymerisation der Suspension zusetzen. Geeignete Treibmittel sind zum Beispiel aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Bei der Suspensionspolymerisation entstehen perlförmige, im Wesentlichen runde Teilchen mit einem mittleren Durchmesser im Bereich von 0,2 bis 2 mm.

Zur Verbesserung der Verarbeitbarkeit können die fertigen expandierbaren Styrolpolymergranulate durch Glycerinester, Antistatika oder Antiverklebungsmittel beschichten werden.

Das EPS Granulat kann mit Glycerinmonostearat GMS (typischerweise 0,25 %), Glycerintristearat (typischerweise 0,25 %) feinteiliger Kieselsäure Aerosil R972 (typischerweise 0,12 %) und Zn-Stearat (typischerweise 0,15 %), sowie Antistatikum beschichtet werden.

Die erfindungsgemäßen expandierbaren Styrolpolymergranulate können in einem ersten Schritt mittels Heißluft oder Wasserdampf zu Schaumpartikeln mit einer Dichte im Bereich von 5 bis 150 kg/m³, insbesondere 10 bis 50 kg/m³ vorgeschäumt und in einem zweiten Schritt in einer geschlossenen Form zu Partikelformteilen verschweißt werden.

Die expandierbaren Polystyrolteilchen können zu Polystyrolschaumstoffen mit Dichten von 8 bis 150 kg/m³ bevorzugt von 10 bis 50 kg/m³, verarbeitet werden (gemessen nach ISO 845). Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

In einer weiteren bevorzugten Ausführungsform ist der Schaumstoff ein extrudiertes Polystyrol (XPS), erhältlich durch:
(a) Erhitzen einer Polymerkomponente P zur Ausbildung einer Polymerschmelze,
(b) Einbringen einer Treibmittelkomponente T in die Polymerschmelze zur Ausbildung einer schäumbaren Schmelze,
(c) Extrusion der schäumbaren Schmelze in einen Bereich niedrigeren Drucks unter Aufschäumen zu einem Extrusionsschaum und
(d) Zugabe des erfindungsgemäßen Flammschutzmittels sowie gegebenenfalls weiterer Hilfs- und Zusatzstoffe in mindestens einem der Schritte a) und/oder b).

Erfindungsgemäße Schaumstoffe auf Basis von Styrolpolymeren, insbesondere EPS und XPS, eignen sich beispielsweise zur Verwendung als Dämm- und/oder Isolierstoffe, insbesondere in der Bauindustrie. Bevorzugt ist eine Verwendung als halogenfreies Dämm- und/oder Isoliermaterial, insbesondere in der Bauindustrie.

Erfindungsgemäße Schaumstoffe, insbesondere auf Basis von Styrolpolymeren, wie EPS und XPS, zeigen bevorzugt eine Verlöschzeit (Brandtest B2 nach DIN 4102 bei einer Schaumstoffdichte von 15 g/l und einer Ablagerungszeit von 72 h) von ≤ 15 sec, besonders bevorzugt ≤ 10 sec, und erfüllen damit die Bedingungen zum Bestehen des genannten Brandtests, solange die Flammenhöhe die in der Norm angegebene Messmarke nicht überschreitet.

Die Erfindung wird durch die nachfolgenden Beispiele näher erläutert, ohne sie dadurch zu beschränken.

### Beispiele

**Komponente a) Di- und Polysulfide**

| | | |
|---|---|---|
| 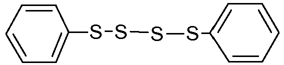 | Diphenyltetrasulfid | SV1 |
| 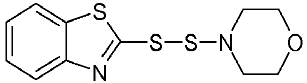 | 4-(2-Benzothiazoldithio)morpholin | SV2 |
| 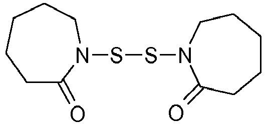 | Dicaprolactamdisulfid | SV3 |
| 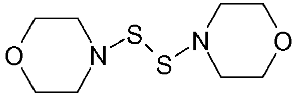 | Morpholindisulfid | SV4 |
| 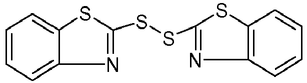 | 2,2-Dithio-bis-(benzothiazol) | SV5 |
| 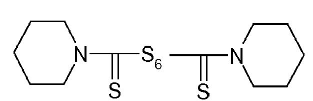 | Dipentamethylenthiuramhexasulfid | SV6 |

**Komponente b) Phosphorverbindungen**

| | | |
|---|---|---|
| 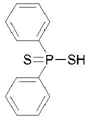 | Diphenyldithiophosphinigsäure | PV1 |
| 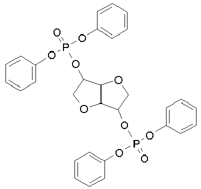 | Phosphorsäure-6-(diphenoxy-phosphoryloxi)-hexahydro-furo[3,2-b]-furan-3-ylester diphenylester | PV2 |
| 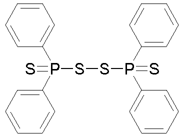 | Bis(diphenylphosphinothioyl)disulfid | PV3 |
| 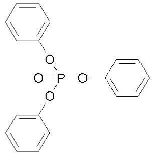 | Triphenylphosphat | PV4 |
| 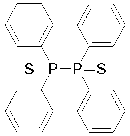 | 1,1,2,2-Tetraphenyldiphosphindisulfid | PV5 |
| 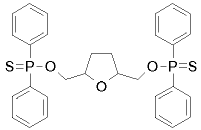 | 2,3,4,5-Tetrahydrofuran-2,5-yl-dimethyl-2,5-bis(diphenylthiophosphinsäureester) | PV6 |
| 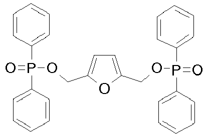 | Furan-2,5-yl-dimethyl-2,5-bis(diphenylphosphinsäureester) | PV7 |

Die in den Versuchen eingesetzten organischen Phosphorverbindungen PV 1- 7 wurden nach bekannten Vorschriften synthetisiert oder kommerziell erworben:
PV1: kommerziell bei ABCR
PV2:

Synthese von Isosorbit-bis-diphenylphosphat:
Apparatur:
   4000 ml-Rührapparatur, Argoninertisierung
*Ansatz:*
   298,2 g (2,0 mol) Isosorbit 98 %
   506 g (5,0 mol) Triethylamin
   2000 mL Toluol
   1120 g (4,0 mol) Chlordiphenylphosphat 96 %

In einer 4 L-Standardrührapparatur wird aufgeschmolzenes Isosorbit (298,2 g, 2 mol) in Toluol (2000 mL) bei RT eingebracht. Hierbei fällt ein Großteil des Isosorbits wieder aus. Der Ansatz wird auf 80°C erwärmt (90% des Isosorbits sind gelöst). Die Lösung anschließend wieder auf RT kommen lassen. Bei 22 bis 42°C wird Chlordiphenylphosphat (1120 g, 4,0 mol) innerhalb von 5 h zutropft. Der gelbe, trübe Ansatz wird über Nacht bei RT nachrührt. Reaktionskontrolle via 31P-NMR indiziert quantitativen Umsatz.

Das ausgefallenen Triethylammoniumchlorid über eine Schlenckfritte (Stickstoffinertisiert) absaugt und mit Toluol (1x 300 mL) nachgewaschen. Das Filtrat wird mit gesättigter, wässriger Na₂CO₃-Lösung (2 x 500 mL) ausgeschüttelt, anschließend mit Wasser (2 x 500 mL) gewaschen und über Na₂SO₄ über Nacht getrocknet. Das Na₂SO₄ wird abgesaugt und mit Toluol (1x 300 mL) nachgewaschen. Das Filtrat wird am Rotationsverdampfer im Vakuum eingeengt (65 °C, 77 mbar), anschließend 4 h bei 80°C am Ölpumpenvakuum getrocknet.
Das Produkt wird als rotbraunes Öl (1046g, 86 % d.Th.) erhalten, Reinheit > 96 % (basierend auf 31P-NMR).
Eine wässrige Emulsion des Produkts wies pH 5,0 auf.

### Analytische Daten:

³¹P-NMR (toluol*_{d8}*), [ppm] : -11.2 (d, ³J_{P,H}=7 Hz), -11.9 (d, ³J_{P,H}=7 Hz) (2 Isomere). ¹H-NMR (toluol*_{d8}*), [ppm] : 7.37-7.22 (m, 8 H, ar), 7.16-7.00 (m, 8 H, ar), 7.00-6.89 (m, 4H, ar), 5.15-5.01 (m, 1 H, CH_{isosorbit}), 4.95-4.82 (m, 1 H, CH_{isosorbit}), 4.62-4.52 (m, 1 H, CH_{isosorbit}), 4.50-4.40 (m, 1 H, CH_{isosorbit}), 4.08-3.96 (m, 1 H, CH_{isosorbit}), 3.83-3.71 (m, 1 H, CH_{isosorbit}), 3.69-3.59 (m, 1 H, CH_{isosorbit}), 3.59-3.47 (m, 1 H, CH_{isosorbit}).
PV3: M. G. Zimin; N. G. Zabirov; V. Smirnov; Zhournal Obschei Khimii; 1980; 50; 1; 24-30.
PV4: Disflamoll TP der Firma Lanxess
PV5: W. Kuchen, H. Buchwald, Chem. Ber., 1958, 91, 2871-2877.
PV6: HCA der Firma Sanko

### PV6:

### Herstellung von 2,3,4,5-Tetrahydrofuran-2,5-yl-dimethyl-2,5-bis(diphenyl-thiophosphinsäureester)

### Apparatur:

1 L Vierhals Rundkolben mit KPG-Rührer, Rückflusskühler mit Blasenzähler und Ar-Einleitung, Thermometer und Tropftrichter.

**Ansatz:**

| | | |
|---|---|---|
| 29.1 g | (0.22 mol) | 2,5-Bis(hydroxymethyl)-2,3,4,5-tetrahydrofuran |
| 116.0 g | (0.45 mol, 2.08 Äq.) | Diphenylthiophosphinsäurechlorid |
| 36.9 g | (0.45 mol 2.08 Äq.) | *N*-Methylimidazol |
| 300 mL | | Toluol |

### Durchführung:

2,5-Bis(hydroxymethyl)-2,3,4,5-tetrahydrofuran (29 g, 0.22 mol) wird in 300 mL Toluol gelöst. Zu der Lösung wird *N*-Methylimidazol (36.9 g, 0.45 mol, 2.1 Äq.) zugegeben und Diphenylthiophosphinsäurechlorid (116.0 g, 0.45 mol, 2.1 Äq.) innerhalb von 45 Minuten zugetropft. Die Temperatur steigt dabei von 24 °C auf 43 °C an. Es wird 24 Stunden auf 100 °C erhitzt. Anschließend wird die Lösung auf RT abkühlen lassen. Nach Auskristallisieren des *N*-Methylimidazol Hydrochlorids wird abdekantiert und die organische Phase zunächst mit 1,5 %iger HCl Lösung (150 mL), dann mit Wasser (200 mL), schließlich mit 7,5 %iger NaHCO₃ Lösung (2x150 mL)gewaschen. Die organische Phase wird über Na₂SO₄ getrocknet. Nach dem Abfiltrieren des Trockenmittels wird das Lösungsmittel im Vakuum entfernt. Das Rohprodukt, ein rotbraunes, festes Öl (129.6 g, 104 %), wird durch eine Kieselgelfiltration aufgereinigt (Eluent: n-Hexan/EE 1:0-1:1).

Man erhält das Produkt als braunes Öl (88,1 g, 71 %), in einer Reinheit zu 97 % (basierend auf ³¹P-NMR).

### Analytische Daten:

**¹H-NMR** (360 MHz, CDCl₃, 300 K): = 1.65-1.80 (m, 2H, C*H*₂, _{THF}), 1.82-2.00 (m, 2H, C*H*₂, _{THF}), 3.90-4.04 (m, 4H, C*H*₂, _{Methylen}), 4.15-4.30 (m, 2H, C*H*_{THF}), 7.32-7.43 (m, 12H, C*Hₘ*, *p*), 7.82-7.93 (m, 8H, C*Hₒ*) ppm.
**¹³C-NMR** (125 MH_{z}, CDCl₃, 300 K): δ = 27.45 (s, *C*H_{2,THF}), 66.33 (d, *C*H_{2,Methylen}, ²J_{C-P}= 6.0 Hz), 78.14 (d, *C*H_{THF}, ³J_{C-P}=8.6 Hz), 128.23 (d, *C*H_{*m,Isomer1*/*2*}, ³J_{C-P}=4.6 Hz), 128.34 (d, *C*H_{*m,Isomer1*/*2*}, ³J_{C-P}=4.0 Hz), 130.94 (d, *C*H_{*o,Isomer1*/*2*}, ²J_{C-P}=13.8 Hz), 131.03 (d, *C*H_{*o,Isomer1*/*2*}, ³J_{C-P}=13.8 Hz), 131.70 (d, CH_{*p,Isomer1*/*2*}, ⁴J_{C-P}=2.9 Hz), 131.74 (d, CH_{*p,Isomer1*/*2*}, ⁴J_{C-P}=2.9 Hz), 133.62 (d, *C*H_{*i,Isomer1*/*2*}, ¹J_{C-P}=27.0 Hz), 134.50 (d, *C*H_{*i,Isomer1*/*2*}, ¹J_{C-P}=27.0 Hz) ppm.
**³¹P-NMR** (145 MHz, CDCl₃, 300 K): δ = 83.225 (m) ppm.
- **ESI(+)-HRMS** (m/z):: ber.: 533.1647 [C₃₀H₃₁O₅P₂]⁺ gef.: 533.1629 [M+H]⁺.
- **PV7:**: **Herstellung von Furan-2,5-yl-dimethyl-2,5-bis(diphenylphosphinsäureester)**

### Apparatur:

1 L Vierhals Rundkolben mit KPG-Rührer, Rückflusskühler mit Blasenzähler und N2-Einleitung, Thermometer und Tropftrichter.

**Ansatz:**

| | | |
|---|---|---|
| 23.0 g | (0.18 mol) | 2,5-Bis(hydroxymethyl)furan |
| 86.9 g | (0.36 mol, 2.0 Äq.) | Diphenylphosphinsäurechlorid |
| 40.6 g | (0.40 mol, 2.2 Äq.) | Triethylamin |
| 300 mL | | Toluol |

### Durchführung:

2,5-Bis(hydroxymethyl)furan (23 g, 0.18 mol) wird in 300 ml Toluol weitestgehend gelöst (löst sich nicht komplett). Zu der Suspension wird Triethylamin (40.6 g, 0.4 mol, 2.2 Äq.) gegeben und Diphenylphosphinsäurechlorid (87 g, 0.36 mol, 2.0 Äq.) zugetropft. Die Temperatur steigt innerhalb von 25 min (ca. 1/3 zugetropft) von 23 °C auf 33 °C. Es wird anschließend mit kaltem Wasser auf 27 °C (herunter)gekühlt und die Zutropfgeschwindigkeit so eingestellt, dass 27 °C gehalten werden. Es wird insgesamt drei Tage bei Raumtemperatur gerührt.

Zur Aufarbeitung wird mit 7,5 %iger NaHCO₃ Lösung (2x250 mL) und Wasser (250 mL) gewaschen, anschließend über Na₂SO₄ getrocknet und schließlich das Lösungsmittel im Vakuum entfernt. Das Rohprodukt wird nochmals in 300 ml CH₂Cl₂ aufgenommen und mit 500 ml 7.5 %iger NaHCO₃ Lösung drei Stunden ausgerührt. Die Phasen werden getrennt und die organische Phase über Na₂SO₄ getrocknet. Das Lösungsmittel wird im Vakuum entfernt und man erhält das Produkt als braunen Feststoff (79 g, 83 %) in einer Reinheit >99 % (basierend auf ³¹P-NMR).

### Analytische Daten:

¹H-NMR (500 MHz, Toluol-d₈, 300 K): = 4.789 (d, 4H, C*H*2, 3JP-H=8.2 Hz), 5.892 (s, 2H, *CHFuran*), 7.01-7.07 (m, 12H, C*Hm, p*), 7.82-7.87 (m, 8H, C*Ho*) ppm.
**¹³C-NMR** (125 MHz, Toluol-d₈, 300 K): δ = 58.13 (d, CH2, 2JC-P=5.2 Hz), 111.57 (s, CH), 128.58 (d, *C*H*m*, 3JC-P=13,2 Hz), 131.91 (d, *C*H*p*, 4JC-P=2.9 Hz), 132.05 (d, *C*H*o*, 2JC-P=9.7 Hz), 133.02 (d, CH*i*, 1JC-P=135.4 Hz) ppm.
**³¹P-NMR** (145 MHz, Toluol-d₈, 300 K): δ = 31,167 (m) ppm.
- **ESI(+)-HRMS** (m/z):: ber.: 529.1334 [C30H27O5P2]+ gef.: 529.1328 [M+H]+.

**TGA** (unter Argon): 155 °C (2 % Masseverlust), 160 °C (5 % Masseverlust), 200 °C (10 % Masseverlust).

Bei den Beispielen wurden die Schwefelverbindungen SV1 bis SV6 eingesetzt. Die in den Versuchen eingesetzten organischen Polysulfide wurden nach bekannten Vorschriften synthetisiert oder kommerziell erworben:
SV1:
   Herstellung von Diphenyltetrasulfid
   Wie beschrieben in: Zysman-Colman, Eli; Harpp, David N.; J. Org.Chem; 2003;68; 6; 2487 - 2489.
SV2: kommerziell von ABCR
SV3: kommerziell von Raschig
SV4: kommerziell von ABCR
SV5: kommerziell von ABCR
SV6: kommerziell von Pfaltz & Bauer

### Beschreibung der Versuche:

Die Ermittlung des Brandverhaltens der Schaumstoffplatten erfolgte bei einer Schaumstoffdichte von 15 kg/m³ nach DIN 4102 (Brandtest B2).

Als Vergleichsversuch wurde Hexabromcyclododecan (im Folgenden als HBCD bezeichnet) eingesetzt.

### Expandierbare Styrolpolymerisate

7 Gew.-Teile n-Pentan wurden in eine Polystyrolschmelze aus PS 148H (Mw = 240 000 g/mol, Mn = 87 000 g/mol bestimmt mittels GPC, RI-Detektor, PS als Standard) der BASF SE mit einer Viskositätszahl VZ von 83 ml/g eingemischt. Nach Abkühlen der treibmittelhaltigen Schmelze von ursprünglich 260°C auf eine Temperatur von 190°C, wurde eine Polystyrolschmelze, welche die in der Tabelle genannten Flammschutzmittel enthielt, über einen Seitenstromextruder in den Hauptstrom eingemischt.

Die angegebenen Mengen in Gew.-Teilen beziehen sich auf die gesamte Polystyrolmenge.

Das Gemisch aus Polystyrolschmelze, Treibmittel und Flammschutzmittel wurde mit 60 kg/h durch eine Düsenplatte mit 32 Bohrungen (Durchmesser der Düsen 0,75 mm) gefördert. Mit Hilfe einer druckbeaufschlagten Unterwassergranulierung wurden kompakte Granulate mit enger Größenverteilung hergestellt.

Das Molekulargewicht der Granulate betrug 220 000 g/mol (Mw) bzw. 80 000 g/mol (Mn) (bestimmt mittels GPC, RI-Detektor, PS als Standard). Durch Einwirkung von strömendem Wasserdampf wurden die Granulate vorgeschäumt und nach 12-stündiger Lagerung durch weitere Behandlung mit Wasserdampf in einer geschlossenen Form zu Schaumstoffblöcken einer Dichte von 15 kg/m³ verschweißt. Die Ermittlung des Brandverhaltens der Schaumstoffplatten erfolgte nach 72-stündiger Lagerung bei einer Schaumstoffdichte von 15 kg/m³ nach DIN 4102.

Die Ergebnisse sind in Tabelle 1 zusammengestellt:

**Tabelle 1: Brandverhalten von erfindungsgemäßer Polymerzusammensetzung (Beispiele) und von Vergleichsbeispielen**

| **Bsp.** | **Flammschutzmittel (Gew.-Teile)** | **Brandtest (B2 nach DIN 4102) / Verlöschzeit (s)** |
|---|---|---|
| VB1 | 4 - HBCD (Vergleich) | bestanden / 6,4 s |
| VB2 | 8 PV 1 | bestanden / 5,3 s |
| 1 | 3,5 - PV 1 + 4 - SV 4 | bestanden / 7,7 s |
| 2 | 3,5 - PV 1 + 4 - SV 6 | bestanden / 6,9 s |
| VB3 | 15 - PV 2 | nicht bestanden / brennt ab |
| 3 | 3 - PV 2 + 4 - SV 5 | bestanden / 7,3 s |
| 4 | 3 - PV 2 + 4 - SV 2 | bestanden / 11,2 s |
| 5 | 3- PV 2 + 4 - SV 3 | bestanden / 8,9 s |
| VB4 | 8 - PV 3 | bestanden / 5,0 s |
| 6 | 2 - PV 3 + 5 - SV 5 | bestanden / 8,9 s |
| VB5 | 20 - PV 4 | nicht bestanden / brennt ab |
| 7 | 5 - PV 4 + 4 - SV 6 | bestanden / 10,1 s |
| 8 | 5 - PV 4 + 4 - SV 3 | bestanden / 7,8 s |
| VB6 | 8 - PV5 | bestanden / 5,1 s |
| 9 | 2,5 - PV 5 + 3 - SV 1 | bestanden / 5,8 s |
| 10 | 2,5 - PV 5 + 5 - SV 4 | bestanden / 11,1 s |
| VB7 | 15 - PV6 | bestanden / 8,7 s |
| 11 | 3 - PV 6 + 2 - SV 1 | bestanden / 9,0 s |
| VB8 | 15 - PV 7 | nicht bestanden / brennt ab |
| 12 | 4,5 - PV 7 + 3 - SV 1 | bestanden / 8,9 s |
| VB9 | ----- | nicht bestanden / brennt ab |

**Tabelle 2: Einfluss der Schaumstoffdichte von Polystyrolschaumstoffprüfkörpern hergestellt aus EPS auf das Brandergebnis. Die in den Beispielen beschriebenen Teile sind Gewichtsteile.**

| **Bsp.** | **Flammschutzmittel (Gew.-Teile)** | **Schaumstoffdichte [kg/m³] (ISO 845)** | **Brandtest (B2 nach DIN 4102) / Verlöschzeit (s)** |
|---|---|---|---|
| 3 | 3 PV 2 + 4 SV 5 | 15,2 | bestanden / 7,3 s |
| 13 | 3 PV 2 + 4 SV 5 | 62,4 | bestanden / 11,9 s |
| 14 | 3 PV 2 + 4 SV 5 | 110,8 | bestanden /14,2 s |

**Tabelle 3: Druckspannung von Polystyrolschaumstoffprüfkörpern hergestellt aus EPS (bei 10 % Stauchung) bei einer Schaumstoffdichte von 15 kg/m³. Die in den Beispielen beschriebenen Teile sind Gewichtsteile.**

| **Bsp.** | **Flammschutzmittel (Gew.-Teile)** | **Druckspannung (kPa) (ISO 844)** | **Brandtest (B2 nach DIN 4102) / Verlöschzeit (s)** |
|---|---|---|---|
| VB1 | 4 - HBCD | 75,2 | bestanden / 6,4 s |
| VB6 | 8 - PV 5 | 68,7 | bestanden / 5,1 s |
| 9 | 2,5 - PV 5 + 3 - SV 1 | 73,4 | bestanden / 5,8 s |
| VB7 | 15 - PV 6 | 63,2 | bestanden / 8,7 s |
| 11 | 3 - PV 6 + 2 - SV 1 | 75,6 | bestanden / 9,0 s |

**Tabelle 4: Brandverhalten von Polystyrolschaumstoffprüfkörpern hergestellt aus EPS bei einer Schaumstoffdichte von 15 kg/m³.**

| **Bsp.** | **Flammschutzmittel (Gew. Teile)** | **Grafit (Gew.-Teile)** | **Kreide (Gew.-Teile)** | **Brandtest (B2 nach DIN 4102) / Verlöschzeit (s)** |
|---|---|---|---|---|
| VB1 | 4 - HBCD | 0 | 0 | bestanden 6,4 s |
| VB10 | 4 - HBCD | 4 | 0 | nicht bestanden / brennt ab |
| 15 | 4 - HBCD | 0 | 4 | nicht bestanden / brennt ab |
| VB11 | 8 - HBCD | 4 | 0 | bestanden / 7,3 s |
| 16 | 8 - HBCD | 0 | 4 | bestanden / 5,8 s |
| 3 | 3 PV 2 + 4 SV 5 | 0 | 0 | bestanden / 7,3 s |
| 17 | 3 PV 2 + 4 SV 5 | 4 | 0 | bestanden / 8,9 s |
| 18 | 3 PV 2 + 4 SV 5 | 0 | 4 | bestanden / 9,8 s |

| | | | | |
|---|---|---|---|---|
| Graphit: UF2 98 der Firma Kropfmühl Kreide: Hydrocarb OG der Firma Omya | | | | |

### Extrudierte Polystyrol-Schaumstoffplatten

100 Gew.-Teile Polystyrol 158K (Mw = 261 000 g/mol, Mn = 77 000 g/mol bestimmt mittels GPC, RI-Detektor, PS als Standard) der BASF SE mit einer Viskositätszahl von 98 ml/g, 0,1 Teile Talkum als Keimbildner zur Regelung der Zellgröße und die in der Tabelle angegebenen Teile an Flammschutzmitteln sowie gegebenenfalls Schwefel werden einem Extruder mit einem inneren Schneckendurchmesser von 120 mm kontinuierlich zugeführt. Durch eine in den Extruder angebrachte Einlassöffnung wird gleichzeitig ein Treibmittelgemisch aus 3,25 Gew. Teilen Ethanol und 3,5 Gew. Teilen CO₂ kontinuierlich eingedrückt. Das in dem Extruder bei 180 °C gleichmäßig geknetete Gel wird durch eine Beruhigungszone geführt und nach einer Verweilzeit von 15 Minuten mit einer Austrittstemperatur von 105 °C durch eine 300 mm breite und 1,5 mm weite Düse in die Atmosphäre extrudiert. Der Schaum wird durch einen mit dem Extruder verbundenen Formkanal geführt, wobei eine geschäumte Plattenbahn mit einem Querschnitt 650 mm x 50 mm und einer Dichte von 35 g/l entsteht. Das Molekulargewicht des Polystyrols betrug 240 000 g/mol (Mw) bzw. 70 000 g/mol (Mn) (bestimmt mittels GPC, RI-Detektor, PS als Standard). Das Produkt wurde in Platten geschnitten. Geprüft wurde das Brandverhalten der Proben mit Dicken von 10 mm nach einer Ablagerungszeit von 30 Tagen nach DIN 4102.

Die Ergebnisse der Beispiele sind in der Tabelle 5 zusammengefasst.

**Tabelle 5:**

| **Bsp.** | **Flammschutzmittel (Gew.%)** | **Brandtest (B2 nach DIN 4102) / Verlöschzeit (s)** |
|---|---|---|
| VB12 | 4 - HBCD (Vergleich) | bestanden / 9,4 s |
| VB13 | 8 - PV | bestanden / 6,4 s |
| 19 | 2,5 - PV 1 + 5,0- SV 4 | bestanden / 8,9 s |
| VB14 | 15 - PV 2 | nicht bestanden / brennt ab |
| 20 | 3,0 - PV 2 + 5,0 - SV 5 | bestanden / 9,9 s |
| VB15 | 8 - PV 3 | bestanden / 9,8 s |
| 21 | 2,5 - PV 3 + 5,0 - SV 2 | bestanden / 11,7 s |
| VB16 | 20 - PV 4 | nicht bestanden / brennt ab |
| 22 | 5 - PV 4 + 5,0 - SV 3 | bestanden / 11,3 s |
| VB17 | ---- | nicht bestanden / brennt ab |

## Patentansprüche

1. Flammschutzmittel, enthaltend
a) mindestens eine Schwefelverbindung der Formel (I),
A¹-(Z¹)ₘ-(S)ₙ-(Z²)ₚ-A² (I)
wobei die Symbole und Indizes folgende Bedeutungen haben,
A¹, A² sind gleich oder verschieden C₆-C₁₂-Aryl, Cyclohexyl, Si(OR^{a})₃, ein gesättigter, teilweise ungesättigter oder aromatischer, mono- oder bicyclischer Ring mit 3 bis 12 Ringgliedern, der ein oder mehrer Heteroatome aus der Gruppe N, O und S enthält, und der unsubstituiert oder durch einen oder mehrere Substituenten der Gruppe O, OH, S, SH, COOR^{b}, CONR^{c}R^{d}, C₁-C₁₈-Alkyl, C₁-C₁₈-Alkoxy, C₁-C₁₈-Thioalkyl, C₆-C₁₂-Aryl, C₆-C₁₂-Aryloxy, C₂-C₁₈-Alkenyl, C₂-C₁₈-Alkenoxy, C₂-C₁₈-Alkinyl und C₂-C₁₈-Alkinoxy substituiert ist;
Z¹, Z² sind gleich oder verschieden -CO- oder -CS-;
R^{a} ist C₁-C₁₈-Alkyl;
R^{b}, R^{c}, R^{d} sind gleich oder verschieden H, C₁-C₁₈-Alkyl, C₆-C₁₂-Aryl oder ein aromatischer, mono- oder bicyclischer Ring mit 3 bis 12 Ringgliedern, der ein oder mehrere Heteroatome aus der Gruppe N, O und S enthält;
m, p sind gleich oder verschieden 0 oder 1 und
n ist eine natürliche Zahl von 2 bis 10 und
b) mindestens eine halogenfreie organische Phosphorverbindung mit einem Phosphorgehalt im Bereich von 5 bis 80 Gew.-%, bezogen auf die Phosphorverbindung,
in einem Gewichtsverhältnis a : b 1 : 10 bis 10 : 1.

2. Flammschutzmittel gemäß Anspruch 1, wobei
die Symbole und Indizes in der Formel (I) folgende Bedeutungen haben:
A¹, A² sind gleich oder verschieden Phenyl, Biphenyl, Naphthyl, ein 5- bis 8-gliedriger gesättigter Ring mit ein oder zwei Heteroatomen aus der Gruppe N, S und O, oder ein 5- bis 10-gliedriger, mono- oder bicyclischer aromatischer Ring mit 1 bis 4 Heteroatomen aus der Gruppe N, S und O, wobei die fünf genannten Ringsysteme gleich oder verschieden unsubstituiert oder durch einen oder mehrere Substituenten aus der Gruppe O, OH, C₁-C₁₂-Alkoxy, C₂-C₁₂-Alkenyloxy und COOR^{b} substituiert sind;
Z¹, Z² sind gleich oder verschieden -CO- oder -CS-;
R^{b} ist vorzugsweise H, C₁-C₁₂-Alkyl, C₆-C₁₀-Aryl oder ein aromatischer 5-oder 6-gliedriger Ring, der ein oder mehrere Heteroatome aus der Gruppe N, O und S enthält;
m, p sind ist gleich 0 oder 1 und
n ist eine natürliche Zahl von 2 bis 10.

3. Flammschutzmittel gemäß Anspruch 1 oder 2, wobei
die Symbole in der Formel (I) folgende Bedeutungen haben:
A¹, A² sind gleich oder verschieden 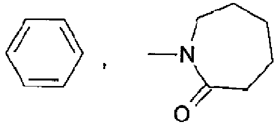 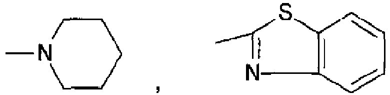 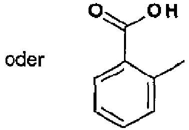
Z¹, Z² sind -CS-;
m, p sind gleich 0 oder 1 und
n ist 2, 4 oder 6.

4. Flammschutzmittel gemäß einem der Ansprüche 1 bis 3, wobei die Verbindung(en) der Formel (I) ausgewählt sind aus

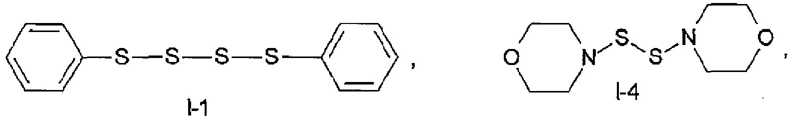

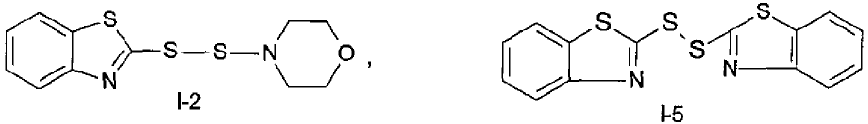

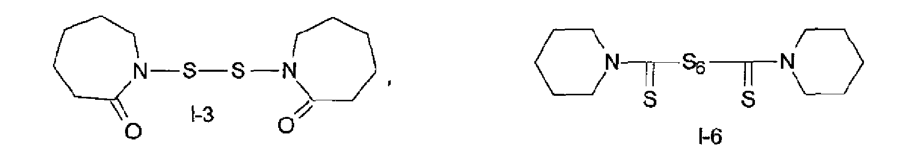

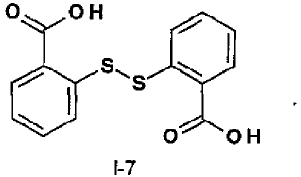

5. Flammschutzmittel gemäß einem der Ansprüche 1 bis 4, wobei die Phosphorverbindung(en) gewählt sind aus:
Phosphorverbindungen der Formel (II),
(X¹ =)ₛPR¹R²R³ (II)
wobei die Symbole und Indizes in der Formel (II) folgende Bedeutungen haben:
R¹ ist C₁-C₁₆-Alkyl, C₁-C₁₀-Hydroxyalkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₈-C₁₀-Aryloxy, C₆-C₁₀-Aryl-C₁-C₁₈-Alkyl, C₆-C₁₀-Aryl-C₁-C₁₆-Alkoxy. SR⁹, COR¹⁰, COOR¹¹, CONR¹²R¹³;
R² ist C₁-C₁₆-Alkyl, C₁-C₁₀-Hydroxyalkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryl-C₁-C₁₆-Alkyl, C₆-C₁₀-Aryl-C₁-C₁₆-Alkoxy, SR⁹, COR¹⁰, COOR¹¹, CONR¹²R¹³;
R³ ist H, SH, SR⁴, OH, OR⁵ oder eine Gruppe -(Y¹)ₙ-[P(= X²)ᵤR⁶ -(Y²)ₙ]ₘ-P(= X³)ₜR⁷R⁸;
oder zwei Gruppen R¹, R², R³ bilden zusammen mit dem Phosphoratom, an das sie gebunden sind, ein Ringsystem;
X¹, X², X³ sind gleich oder verschieden unabhängig voneinander O oder S;
Y¹, Y² sind gleich oder verschieden O oder S;
R⁴, R⁵, R⁹, R¹⁰, R¹¹, R¹², R¹³ sind gleich oder verschieden C₁-C₁₂-Alkyl, C₃-C₈-Cycloalkyl, das unsubstituiert oder durch eine oder mehrere C₁-C₄-Alkylgruppen substituiert ist, C₂-C₁₂-Alkenyl, C₂-C₁₂-Alkinyl, C₆-C₁₀-Aryl oder C₆-C₁₀-Aryl-C₁-C₄-alkyl;
R⁶, R⁷, R^{a} sind gleich oder verschieden unabhängig voneinander C₁-C₁₆-Alkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR⁹, COR¹⁰, COOR¹¹, CONR¹²R¹³;
n ist 0 oder 1, falls Y¹ bzw. Y² O ist, und 1, 2, 3, 4, 5, 6, 7 oder 8, falls Y¹ bzw. Y² S ist;
m ist eine ganze Zahl von 0 bis 100;
s, t, u sind unabhängig voneinander 0 oder 1
und
Phosphorverbindungen der Formel (III), 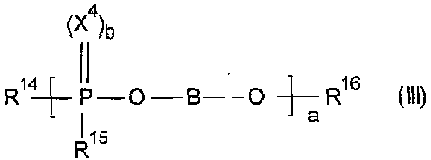 wobei die Symbole in der Formel (III) folgende Bedeutungen haben:
B ist eine Gruppe 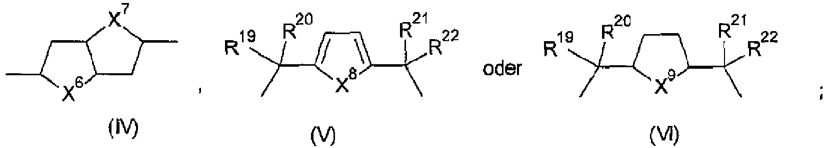
R¹⁶ ist -P(=X⁵)_{c}R¹⁷R¹⁸, H, eine geradkettige oder verzweigte C₁-C₁₂-Alkylgruppe, C₅-C₆-Cycloalkyl, C₆-C₁₂-Aryl, Benzyl, wobei die vier letztgenannten Gruppen unsubstituiert oder durch einen oder mehrere Reste aus der Gruppe C₁-C₄-Alkyl und C₂-C₄-Alkenyl substituiert sind;
R¹⁴ , R¹⁵, R¹⁷ und R¹⁸ sind gleich oder verschieden Wasserstoff, OH, C₁-C₁₆-Alkyl, C₂-C₁₆-Alkenyl, C₁-C₁₆-Alkoxy, C₂-C₁₆-Alkenoxy, C₃-C₁₀-Cycloalkyl, C₃-C₁₀-Cycloalkoxy, C₆-C₁₀-Aryl, C₆-C₁₀-Aryloxy, C₆-C₁₀-Aryl-C₁-C₁₆-Alkyl, C₆-C₁₀-Aryl-C₁-C₁₆-Alkoxy, SR²³, COR²⁴, COOR²⁵, CONR²⁶R²⁷ oder zwei Reste R¹⁴, R¹⁵, R¹⁷, R¹⁸ bilden zusammen mit dem Phosphoratom, an das sie gebunden sind, oder einer Gruppe P-O-B-O-P ein Ringsystem;
R¹⁹, R²⁰, R²¹ , R²² sind gleich oder verschieden H, C₁-C₁₆-Alkyl, C₁-C₁₆-Alkenyl, C₁-C₁₆-Alkoxy, C₁-C₁₆-Alkenoxy;
R²³, R²⁴, R²⁵, R²⁶, R²⁷ sind gleich oder verschieden H, C₁-C₁₆-Alkyl, C₂-C₁₆-Alkonyl, C₆-C₁₀-Aryl, C₆-C₁₀-Aryl-C₁-C₁₆-Alkyl, C₆-C₁₀-Aryl-C₁-C₁₆-Alkoxy;
X⁴, X⁵ sind gleich oder verschieden S oder O;
b, c sind gleich oder verschieden 0 oder 1;
X⁶, X⁷, X⁸, X⁹ sind gleich oder verschieden S oder O und
a ist eine natürliche Zahl von 1 bis 50.

6. Verwendung einer Mischung der Komponenten a) und b) gemäß einem der Ansprüche 1 bis 5 als Flammschutzmittel.

7. Verfahren zur flammhemmenden Ausrüstung von geschäumten oder ungeschäumten Polymeren, wobei man eine Schmelze des Polymers erzeugt und mit dem Flammschutzmittel gemäß einem der Ansprüche 1 bis 5 vermischt.

8. Polymerzusammensetzung, enthaltend ein oder mehrere Polymere und ein Flammschutzmittel gemäß einem der Ansprüche 1 bis 5.

9. Polymerzusammensetzung gemäß Anspruch 8, enthaltend 0,2 bis 10 Gew.-Teile (bezogen auf 100 Gew.-Teile Polymer) an dem Flammschutzmittel.

10. Polymerzusammensetzung gemäß Anspruch 8 oder 9, **dadurch gekennzeichnet, dass** sie halogenfrei ist.

11. Polymerzusammensetzung gemäß einem der Ansprüche 8 bis 10, enthaltend ein Styrolpolymer.

12. Polymerzusammensetzung gemäß einem der Ansprüche 8 bis 10, **dadurch gekennzeichnet, dass** das Polymer ein Schaumstoff ist.

13. Polymerzusammensetzung gemäß Anspruch 12, **dadurch gekennzeichnet, dass** der Polymerschaumstoff eine Dichte von 5 bis 150 g/l aufweist.

14. Polymerzusammensetzung gemäß Anspruch 11, in Form eines expandierbaren Styrolpolymers (EPS).

15. Polymerzusammensetzung gemäß einem der Ansprüche 11 bis 13, in Form eines Styrolpolymerextrusionsschaumstoffes (XPS).

16. Verwendung einer Polymerzusammensetzung gemäß Anspruch 15 und/oder einer Polymerzusammensetzung gemäß Anspruch 14 in expandierter Form als Dämm- und/oder Isoliermaterial.

## Claims

1. A flame retardant comprising
a) at least one sulfur compound of the formula (I)
A¹-(Z¹)ₘ-(S)ₙ-(Z²)ₚ-A² (I)
where the definitions of the symbols and indices are as follows:
A¹ and A² are identical or different, being C₆-C₁₂-aryl, cyclohexyl, Si(OR^{a})₃, a saturated, partially unsaturated, or aromatic, mono- or bicyclic ring having from 3 to 12 ring members and comprising one or more heteroatoms from the group of N, O, and S, where the system is unsubstituted or has substitution by one or more substituents of the group of 0, OH, S, SH, COOR^{b}, CONR^{c}R^{d}, C₁-C₁₈-alkyl, C₁-C₁₈-alkoxy, C₁-C₁₈-thioalkyl, C₆-C₁₂-aryl, C₆-C₁₂-aryloxy, C₂-C₁₈-alkenyl, C₂-C₁₈-alkenoxy, C₂-C₁₈-alkynyl, and C₂-C₁₈-alkinoxy;
Z¹ and Z² are identical or different, being -CO-or -CS-;
R^{a} is C₁-C₁₈-alkyl;
R^{b}, R^{c}, and R^{d} are identical or different, being H, C₁-C₁₈-alkyl, C₆-C₁₂-aryl, or an aromatic, mono- or bicyclic ring having from 3 to 12 ring members and comprising one or more heteroatoms from the group of N, 0, and S;
m and p are identical or different, being 0 or
1, and
n is a natural number from 2 to 10, and
b) at least one halogen-free organophosphorus compound having phosphorus content in the range from 5 to 80% by weight, based on the phosphorus compound,
in an a:b ratio by weight of from 1:10 to 10:1.

2. The flame retardant according to claim 1, where
the definitions of the symbols and indices in the formula (I) are as follows:
A¹ and A² are identical or different, being phenyl, biphenyl, naphthyl, a 5- to 8-membered saturated ring having one or two heteroatoms from the group of N, S, and 0, or a 5- to 10-membered, mono- or bicyclic aromatic ring having from 1 to 4 heteroatoms from the group of N, S, and 0, where the five ring systems mentioned are identical or different, being unsubstituted or having substitution by one or more substituents from the group of 0, OH, C₁-C₁₂-alkoxy, C₂-C₁₂-alkenyloxy, and COOR^{b};
Z¹ and Z² are identical or different, being -CO-
or -CS-;
R^{b} is preferably H, C₁-C₁₂-alkyl, C₆-C₁₀-aryl, or an aromatic 5- or 6-membered ring comprising one or more heteroatoms from the group of N, 0, and S;
m and p are 0 or 1, and
n is a natural number from 2 to 10.

3. The flame retardant according to claim 1 or 2, where
the definitions of the symbols in the formula (I) are as follows:
A¹ and A² are identical or different, being 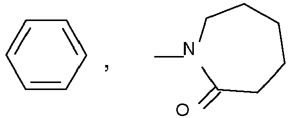 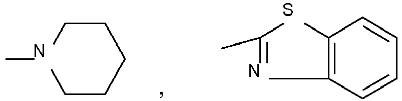 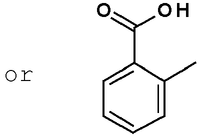
Z¹ and Z² are -CS-;
m and p are 0 or 1, and
n is 2, 4 or 6.

4. The flame retardant according to any of claims 1 to 3, where the compound (s) of the formula (I) have been selected from 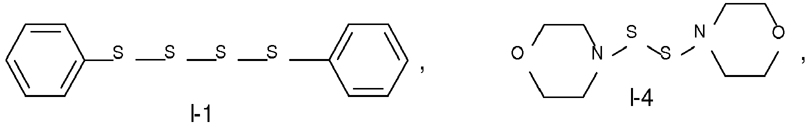 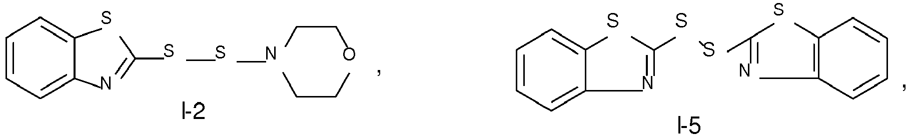 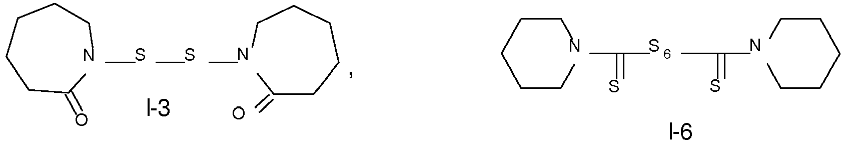 and

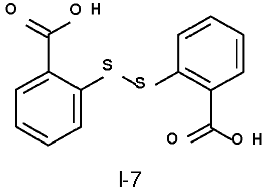

5. The flame retardant according to any of claims 1 to 4, where the phosphorus compound(s) have been selected from:
phosphorus compounds of the formula (II)
(X¹ = )ₛ PR¹R²R³ (II)
where the definitions of the symbols and indices in the formula (II) are as follows:
R¹ is C₁-C₁₆-alkyl, C₁-C₁₀-hydroxyalkyl, C₂-C₁₆-alkenyl, C₁-C₁₆-alkoxy, C₂-C₁₆-alkenoxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, SR⁹, COR¹⁰, COOR¹¹, CONR¹²R¹³;
R² is C₁-C₁₆-alkyl, C₁-C₁₀-hydroxyalkyl, C₂-C₁₆-alkenyl, C₁-C₁₆-alkoxy, C₂-C₁₆-alkenoxy, C₃-C₁₀-cycloalkyl, C₃-C₁₀-cycloalkoxy, C₆-C₁₀-aryl, C₆-C₁₀-aryl-C₁-C₁₆-alkyl, C₆-C₁₀-aryl-C₁-C₁₆-alkoxy, SR⁹, COR¹⁰, COOR¹¹, CONR¹²R¹³;
R³ is H, SH, SR⁴, OH, OR⁵, or a
- (Y¹)ₙ-[P(= X²)ᵤR⁶-(Y²)ₙ]ₘ-P(= X³)ₜR⁷R⁸ group;
or two groups R¹, R², R³ form, together with the phosphorus atom bonded thereto, a ring system;
X¹, X² and X³ are identical or different, being, independently of one another, 0 or S;
Y¹ and Y² are identical or different, being 0 or S;
R⁴, R⁵, R⁹, R¹⁰, R¹¹, R¹², and R¹³ are identical or different, being C₁-C₁₂-alkyl, C₃-C₈-cycloalkyl, which may either have no substitution or may have one or more C₁-C₄-alkyl groups as substituents, or being C₂-C₁₂-alkenyl, C₂-C₁₂-alkynyl, C₆-C₁₀-aryl, or C₆-C₁₀-aryl-C₁-C₄-alkyl;
R⁶, R⁷, and R⁸ are identical or different, being, independently of one another, C₁-C₁₆-alkyl, C₂-C₁₆-alkenyl, C₁-C₁₆-alkoxy, C₂-C₁₆-alkenoxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, SR⁹, COR¹⁰, COOR¹¹, CONR¹²R¹³;
n is 0 or 1 if Y¹ and, respectively, Y² is 0, and is 1, 2, 3, 4, 5, 6, 7, or 8 if Y¹ and, respectively, Y² is S;
m is an integer from 0 to 100; and
s, t, and u are, independently of one another, 0 or 1,
and
phosphorus compounds of the formula (III) 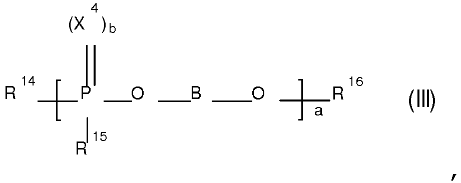
where the definitions of the symbols in the formula (III) are as follows:
B is a 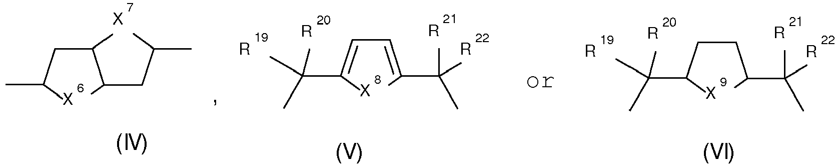
group;
R¹⁶ is -P(=X⁵)_{c}R¹⁷R¹⁸, H, a straight-chain or branched C₁-C₁₂-alkyl group, C₅-C₆-cycloalkyl, C₆-C₁₂-aryl, or benzyl, where the four last-mentioned groups are unsubstituted or have substitution by one or more radicals from the group of C₁-C₄-alkyl and C₂-C₄-alkenyl;
R¹⁴, R¹⁵, R¹⁷, and R¹⁸ are identical or different, being hydrogen, OH, C₁-C₁₆-alkyl, C₂-C₁₆-alkenyl, C₁-C₁₆-alkoxy, C₂-C₁₆-alkenoxy, C₃-C₁₀-cycloalkyl, C₃-C₁₀-cycloalkoxy, C₆-C₁₀-aryl, C₆-C₁₀-aryloxy, C₆-C₁₀-aryl-C₁-C₁₆-alkyl, C₆-C₁₀-aryl-C₁-C₁₆-alkoxy, SR²³, COR²⁴, COOR²⁵, CONR²⁶R²⁷, or two radicals R¹⁴, R¹⁵, R¹⁷, or R¹⁸ form, together with the phosphorus atom bonded thereto, or with a P-O-B-O-P group, a ring system;
R¹⁹, R²⁰, R²¹, and R²² are identical or different, being H, C₁-C₁₆-alkyl, C₁-C₁₆-alkenyl, C₁-C₁₆-alkoxy, C₁-C₁₆-alkenoxy;
R²³, R²⁴, R²⁵, R²⁶, and R²⁷ are identical or different, being H, C₁-C₁₆-alkyl, C₂-C₁₆-alkenyl, C₆-C₁₀-aryl, C₆-C₁₀-aryl-C₁-C₁₆-alkyl, C₆-C₁₀-aryl-C₁-C₁₆-alkoxy;
X⁴ and X⁵ are identical or different, being S or 0;
b and c are identical or different, being 0 or 1;
X⁶, X⁷, X⁸, and X⁹ are identical or different, being S or 0, and
a is a natural number from 1 to 50.

6. The use of a mixture of components a) and b) according to any of claims 1 to 5, as flame retardant.

7. A process for rendering foamed or unfoamed polymers flame-retardant, where a melt of the polymer is produced and mixed with the flame retardant according to any of claims 1 to 5.

8. A polymer composition comprising one or more polymers and a flame retardant according to any of claims 1 to 5.

9. The polymer composition according to claim 8, comprising from 0.2 to 10 parts by weight (based on 100 parts by weight of polymer) of the flame retardant.

10. The polymer composition according to claim 8 or 9, which is halogen-free.

11. The polymer composition according to any of claims 8 to 10, comprising a styrene polymer.

12. The polymer composition according to any of claims 8 to 10, wherein the polymer is a foam.

13. The polymer composition according to claim 12, wherein the density of the polymer foam is from 5 to 150 g/l.

14. The polymer composition according to claim 11, in the form of an expandable styrene polymer (EPS).

15. The polymer composition according to any of claims 11 to 13, in the form of an extruded styrene polymer foam (XPS).

16. The use of a polymer composition according to claim 15 and/or of a polymer composition according to claim 14 in expanded form as insulation material.

## Revendications

1. Agent ignifuge, contenant :
a) au moins un composé de soufre de formule (I)
A¹-(Z¹)ₘ-(S)ₙ-(Z²)ₚ-A² (1)
dans laquelle les symboles et les indices ont les significations suivantes :
A¹, A² sont identiques ou différents, et représentent aryle en C₆-C₁₂, cyclohexyle, Si(OR^{a})₃, un cycle saturé, partiellement insaturé ou aromatique, mono- ou bicyclique, de 3 à 12 éléments de cycle, qui contient un ou plusieurs hétéroatomes du groupe constitué par N, 0 et S, et qui est non substitué ou substitué par un ou plusieurs substituants du groupe constitué par 0, OH, S, SH, COOR^{b}, CONR^{c}R^{d}, alkyle en C₁-C₁₈, alcoxy en C₁-C₁₈, thioalkyle en C₁-C₁₈, aryle en C₆-C₁₂, aryloxy en C₆-C₁₂, alcényle en C₂-C₁₈, alcénoxy en C₂-C₁₈, alcynyle en C₂-C₁₈ et alcynoxy en C₂-C₁₈ ;
Z¹, Z² sont identiques ou différents, et représentent -CO- ou -CS- ;
R^{a} représente alkyle en C₁-C₁₈ ;
R^{b}, R^{c}, R^{d} sont identiques ou différents, et représentent H, alkyle en C₁-C₁₈, aryle en C₆-C₁₂ ou un cycle aromatique mono- ou bicyclique, de 3 à 12 éléments de cycle, qui contient un ou plusieurs hétéroatomes du groupe constitué par N, 0 et S ;
m, p sont identiques ou différents, et représentent 0 ou 1, et
n est un nombre naturel de 2 à 10, et
b) au moins un composé de phosphore organique sans halogène ayant une teneur en phosphore dans la plage allant de 5 à 80 % en poids, par rapport au composé de phosphore,
en un rapport en poids a:b de 1:10 à 10:1.

2. Agent ignifuge selon la revendication 1, dans lequel les symboles et les indices dans la Formule (I) ont les significations suivantes :
A¹, A² sont identiques ou différents, et représentent phényle, biphényle, naphtyle, un cycle saturé de 5 à 8 éléments, contenant un ou deux hétéroatomes du groupe constitué par N, S et 0, ou un cycle aromatique mono- ou bicyclique, de 5 à 10 éléments de cycle, contenant 1 à 4 hétéroatomes du groupe constitué par N, S et 0, les cinq systèmes cycliques cités étant, de manière identique ou différente, non substitués ou substitués par un ou plusieurs substituants du groupe constitué par 0, OH, alcoxy en C₁-C₁₂, alcényloxy en C₂-C₁₂ et COOR^{b} ;
Z¹, Z² sont identiques ou différents, et représentent -CO- ou -CS- ;
R^{b} représente de préférence H, alkyle en C₁-C₁₂, aryle en C₆-C₁₀ ou un cycle aromatique de 5 à 6 éléments, qui contient un ou plusieurs hétéroatomes du groupe constitué par N, 0 et S ;
m, p sont identiques, et représentent 0 ou 1, et
n est un nombre naturel de 2 à 10.

3. Agent ignifuge selon la revendication 1 ou 2, dans lequel
les symboles dans la Formule (I) ont les significations suivantes :
A¹, A² sont identiques ou différents, et représentent 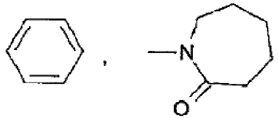 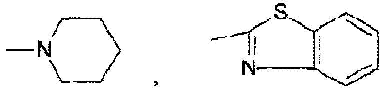 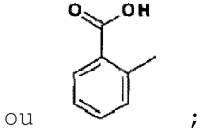
Z¹, Z² représentent -CS- ;
m, p sont identiques, et représentent 0 ou 1, et
n représente 2, 4 ou 6.

4. Agent ignifuge selon l'une quelconque des revendications 1 à 3, dans lequel le ou les composés de formule (I) sont choisis parmi :

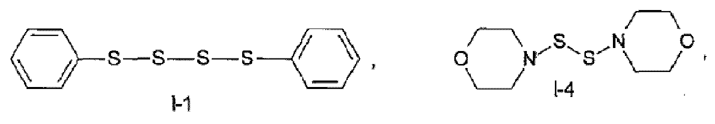

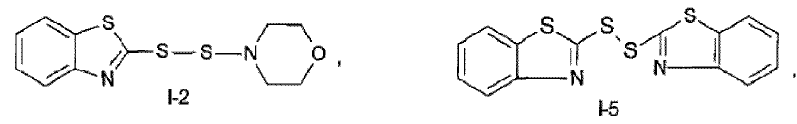

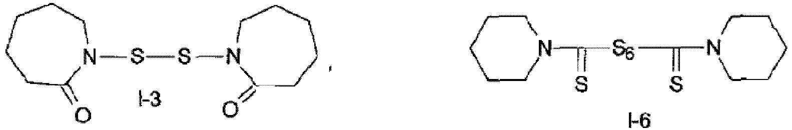

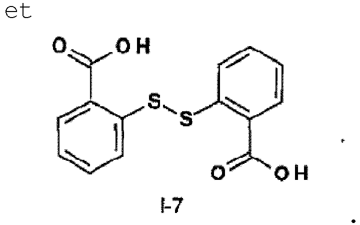

5. Agent ignifuge selon l'une quelconque des revendications 1 à 4, dans lequel le ou les composés de phosphore sont choisis parmi :
les composés de phosphore de formule (II)
(X¹=)ₛPR¹R²R³ (II)
les symboles et les indices dans la formule (II) ayant les significations suivantes :
R¹ représente alkyle en C₁-C_{I6}, hydroxyalkyle en C₁-C₁₀, alcényle en C₂-C₁₆, alcoxy en C₁-C_{I6}, alcénoxy en C₂-C₁₆, cycloalkyle en C₃-C₁₀, cycloalcoxy en C₃-C₁₀, aryle en C₆-C₁₀, aryloxy en C₆-C₁₀, aryle en C₆-C₁₀-alkyle en C₁-C₁₆, aryle en C₆-C₁₀-alcoxy en C₁-C_{I6}, SR⁹, COR¹⁰, COOR¹¹, CONR¹²R¹³ ;
R² représente alkyle en C₁-C_{I6}, hydroxyalkyle en C₁-C₁₀, alcényle en C₂-C₁₆, alcoxy en C₁-C₁₆, alcénoxy en C₂-C₁₆, cycloalkyle en C₃-C₁₀, cycloalcoxy en C₃-C₁₀, aryle en C₆-C₁₀, aryle en C₆-C₁₀-alkyle en C₁-C_{I6}, aryle en C₆-C₁₀-alcoxy en C₁-C_{I6}, SR⁹, COR¹⁰, COOR¹¹, CONR¹²R¹³ ;
R³ représente H, SH, SR⁴, OH, OR⁵ ou un groupe
-(Y¹)ₙ-[P(=X²)ᵤR⁶(Y²)ₙ]ₘ-P(=X³)ₜR⁷R⁸ ;
ou deux groupes R¹, R², R³ forment ensemble avec l'atome de phosphore auquel ils sont reliés un système cyclique ;
X¹, X², X³ sont identiques ou différents, et représentent indépendamment les uns des autres 0 ou S ;
Y¹, Y² sont identiques ou différents, et représentent 0 ou S ;
R⁴, R⁵, R⁹, R¹⁰, R¹¹, R¹², R¹³ sont identiques ou différents, et représentent alkyle en C₁-C₁₂, cycloalkyle en C₃-C₈, qui est non substitué ou substitué par un ou plusieurs groupes alkyle en C₁-C₄, alcényle en C₂-C₁₂, alcynyle en C₂-C₁₂, aryle en C₆-C₁₀ ou aryle en C₆-C₁₀-alkyle en C₁-C₄ ;
R⁶, R⁷, R⁸ sont identiques ou différents, et représentent indépendamment les uns des autres alkyle en C₁-C₁₆, alcényle en C₂-C₁₆, alcoxy en C₁-C_{I6}, alcénoxy en C₂-C₁₆, cycloalkyle en C₃-C₁₀, cycloalcoxy en C₃-C₁₀, aryle en C₆-C₁₀, aryloxy en C₆-C₁₀, aryle en C₆-C₁₀-alkyle en C₁-C₁₆, aryle en C₆-C₁₀-alcoxy en C₁-C₁₆, SR⁹, COR¹⁰, COOR¹¹, CONR¹²R¹³ ;
n représente 0 ou 1 si Y¹ ou Y² représente 0, et 1, 2, 3, 4, 5, 6, 7 ou 8 si Y¹ ou Y² représente S ;
m est un nombre entier de 0 à 100 ;
s, t, u représentent indépendamment les uns des autres 0 ou 1 ;
et
les composés de phosphore de formule (III) 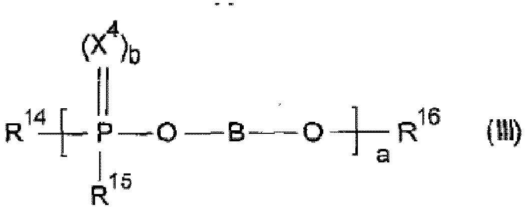 les symboles dans la formule (III) ayant les significations suivantes :
B représente un groupe 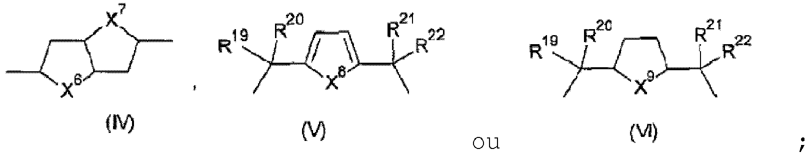
R¹⁶ représente -P(=X⁵)ₒR¹⁷R¹⁸, H, un groupe alkyle en C₁-C₁₂ linéaire ou ramifié, cycloalkyle en C₅-C₆, aryle en C₆-C₁₂, les quatre derniers groupes cités étant non substitués ou substitués par un ou plusieurs radicaux du groupe constitué par alkyle en C₁-C₄ et alcényle en C₂-C₄
R¹⁴, R¹⁵, R¹⁷ et R¹⁸ sont identiques ou différents, et représentent hydrogène, OH, alkyle en C₁-C₁₆, alcényle en C₂-C₁₆, alcoxy en C₁-C₁₆, alcénoxy en C₂-C₁₆, cycloalkyle en C₃-C₁₀, cycloalcoxy en C₃-C₁₀, aryle en C₆-C₁₀, aryloxy en C₆-C₁₀, aryle en C₆-C₁₀-alkyle en C₁-C₁₆, aryle en C₆-C₁₀-alcoxy en C₁-C₁₆, SR²³, COR²⁴, COOR²⁵, CONR²⁶R²⁷ ou deux radicaux R¹⁴, R¹⁵, R¹⁷, R¹⁸ forment ensemble avec l'atome de phosphore auquel ils sont reliés ou un groupe P-O-B-0-P un système cyclique ;
R¹⁹, R²⁰, R²¹, R²² sont identiques ou différents, et représentent H, alkyle en C₁-C₁₆, alcényle en C₁-C₁₆, alcoxy en C₁-C₁₆, alcénoxy en C₁-C₁₆ ;
R²³, R²⁴, R²⁵, R²⁶, R²⁷ sont identiques ou différents, et représentent H, alkyle en C₁-C₁₆, alcényle en C₂-C₁₆, aryle en C₆-C₁₀, aryle en C₆-C₁₀-alkyle en C₁-C₁₆, aryle en C₆-C₁₀-alcoxy en C₁-C₁₆ ;
X⁴, X⁵ sont identiques ou différents, et représentent S ou 0 ;
b, c sont identiques ou différents, et représentent 0 ou 1 ;
X⁶, X⁷, X⁸, X⁹ sont identiques ou différents, et représentent S ou 0, et
a représente un nombre naturel de 1 à 50.

6. Utilisation d'un mélange des composants a) et b) selon l'une quelconque des revendications 1 à 5 en tant qu'agent ignifuge.

7. Procédé d'ignifugation de polymères moussés ou non moussés, selon lequel une masse fondue du polymère est formée et mélangée avec l'agent ignifuge selon l'une quelconque des revendications 1 à 5.

8. Composition polymère, contenant un ou plusieurs polymères et un agent ignifuge selon l'une quelconque des revendications 1 à 5.

9. Composition polymère selon la revendication 8, contenant 0,2 à 10 parties en poids (par rapport à 100 parties en poids de polymère) de l'agent ignifuge.

10. Composition polymère selon la revendication 8 ou 9, **caractérisée en ce qu'**elle est sans halogène.

11. Composition polymère selon l'une quelconque des revendications 8 à 10, contenant un polymère de styrène.

12. Composition polymère selon l'une quelconque des revendications 8 à 10, **caractérisée en ce que** le polymère est une mousse.

13. Composition polymère selon la revendication 12, **caractérisée en ce que** la mousse polymère présente une densité de 5 à 150 g/l.

14. Composition polymère selon la revendication 11, sous la forme d'un polymère de styrène expansible (EPS).

15. Composition polymère selon l'une quelconque des revendications 11 à 13, sous la forme d'une mousse extrudée de polymère de styrène (XPS).

16. Utilisation d'une composition polymère selon la revendication 15 et/ou d'une composition polymère selon la revendication 14 sous forme expansée en tant que matériau amortissant et/ou isolant.
